## Europäisches Patentamt

## European Patent Office

## Office européen des brevets

(19)

(11) Publication number: **0 214 781**
**B1**

(12)

# EUROPEAN PATENT SPECIFICATION

(45) Date of publication of the patent specification:
**17.01.90**

(51) Int. Cl.⁴: **H02P 9/30**, G05B 11/28

(21) Application number: **86306333.5**

(22) Date of filing: **15.08.86**

(54) **Generator voltage regulating circuit.**

(30) Priority: **12.09.85 US 775172**

(43) Date of publication of application:
**18.03.87 Bulletin 87/12**

(45) Publication of the grant of the patent:
**17.01.90 Bulletin 90/3**

(84) Designated Contracting States:
**DE FR GB**

(56) References cited:
**EP-A- 0 106 539**
**DE-B- 2 338 292**
**US-A- 3 970 919**

(73) Proprietor: **GENERAL MOTORS CORPORATION,**
**General Motors Building 3044 West Grand Boulevard,**
**Detroit Michigan 48202(US)**

(72) Inventor: **Bowman, William E., 3704 Sugar Lane, Kokomo**
**Indiana 46902(US)**
Inventor: **Voss, Richard J., 3305 West Boulevard,**
**Kokomo Indiana 46902(US)**
Inventor: **Kirk, Thomas E., 3402 Berkeley Road,**
**Anderson Indiana 46011(US)**

(74) Representative: **Denton, Michael John et al, Patent**
**Section - Luton Office (F6) Vauxhall Motors Limited P.O.**
**Box 3 Kimpton Road, Luton Bedfordshire LU2 0SY(GB)**

ACTORUM AG

## Description

This invention relates to a method of regulating the output voltage of a generator and a voltage regulating circuit therefor, and more particularly to a voltage regulating circuit for a diode-rectified, alternating current, generator that is used to supply the electrical loads on a motor vehicle including charging the storage battery.

Voltage regulating circuits for controlling the field current of a diode-rectified, alternating current, generator, that supplies the electrical loads on a motor vehicle, are well known to those skilled in the art. One known type of voltage regulating circuit senses the voltage applied to the storage battery and if this voltage is higher than a desired regulated voltage a transistor, that controls field current, is switched off. When this voltage drops below the desired regulated voltage the field controlling transistor is switched on. The transistor is repetitively switched on and off in response to sensed voltage changes to thereby cause the output voltage of the generator to be maintained at a predetermined, desired regulated voltage.

In another type of known voltage regulating circuit the field current is pulse-width modulated at a constant frequency to maintain the output voltage of the generator at a desired regulated voltage. The pulse width, in this type of circuit, is a function of the difference between actual output voltage and a desired voltage. Examples of this type of voltage regulating circuit are disclosed in the US patent Nos 2,976,473 and 4,275,344. GB patent no I,392,096 also discloses pulse-width control of field current and in this patent the voltage reference takes the form of a cyclic staircase waveform.

A voltage regulating circuit for a power source, rather than a generator, is disclosed in US-A 3 970 919. This circuit, however, does not provide means for reducing oscillation of the output voltage or the setpoint voltage, nor means for minimizing overvoltage generation.

According to the present invention, a method of regulating the output voltage or a generator, and a voltage regulating circuit for a generator are characterised over US-A 3 970 919 by the features specified in the characterising portions or Claims 1 and 6 respectively.

The voltage regulating circuit of this invention employs pulse width modulation of field current or the generator but does so in a manner that differs from the above-mentioned patents. Thus, the voltage regulating circuit of this invention utilizes digital apparatus that includes an up-down counter which responds to the relative magnitudes of the actual output voltage of the generator and the desired regulated voltage of the generator. When the actual output voltage or the generator is below the desired regulated voltage the up-down counter is incremented or counted up, and when the actual output voltage is below the desired regulated voltage the up-down counter is decremented or counted down. The instantaneous count in the up-down counter is used to determine the on time of a semiconductor switch (such as an MOSFET) that is connected in series with the field winding of the generator and hence determine the pulse-width or the voltage that is applied to the field winding. Whenever actual output voltage exceeds the desired regulated voltage the field controlling semiconductor switch is biased off. Thus, during the time that the actual output voltage is above the desired regulated voltage the field is not energized and the up-down counter is decremented.

When actual output voltage now drops below the desired regulated voltage the field winding is energized at the pulse-width represented by the magnitude of the count in the up-down counter and the up-down counter is incremented.

It accordingly is an object of this invention to provide an improved voltage regulating circuit for a generator and a method of regulating the output voltage of the generator wherein an up-down counter is incremented when the output voltage is below a desired regulated voltage and is decremented when the output voltage is above the desired regulated voltage and wherein the field winding is deenergized as long as the output voltage exceeds the desired regulated voltage and further wherein the field voltage is pulse-width modulated at a pulse-width that is a function of the magnitude of the count in the up-down counter during the time that the output voltage is less than the desired regulated voltage.

Another object of this invention is to provide a motor vehicle electrical circuit wherein a generator that supplies the electrical loads on the motor vehicle, and which is driven by the engine of the motor vehicle, is voltage regulated by controlling field current by the voltage regulating circuit that has been described and further wherein the voltage regulating circuit is so controlled as to minimize the increased torque load that is applied to the engine by the generator when a large electrical load is applied to the generator at the time that the engine and generator are operating at a low speed such as engine idle speed. This object is preferably carried out by varying the counting rate of the up-down counter of the voltage regulating circuit such that the up-counting rate is reduced during engine idle. This has the effect of reducing the time rate of change of the pulse-width of the field voltage when the output voltage of the generator is below the desired regulated voltage. Accordingly, during engine idle, field current is gradually increased so as not to impose a sudden torque load on the engine when a large electrical load is applied to the generator. During engine speeds above idle speed the counting rate is increased to a predetermined value.

Still another object of this invention is to provide a voltage regulating circuit for controlling the field current of a diode-rectified, alternating current, generator that supplies the electrical loads on a motor vehicle including the storage battery that has an improved voltage sensing selector arrangement that is capable of providing a sense voltage to the voltage regulating circuit which represents either battery voltage or the output voltage of the bridge rectifier of the generator.

The object is preferably carried out by providing two voltage dividers, one of which senses battery voltage and the other of which senses the bridge rectifier voltage of the generator. Each voltage divider is comprised of a plurality of resistors and a temperature sensitive thermistor. When a line, that senses battery voltage, has a voltage that is below a predetermined value the sense selector applies the voltage from the voltage divider connected to the bridge rectifier to the voltage regulating circuit.

When battery voltage is above the predetermined value the sense selector applies the voltage from the voltage divider that is connected to the battery to the voltage regulating circuit.

Another object of this invention is to provide a voltage regulating circuit for a diode-rectified, alternating current, generator that supplies the electrical loads on a motor vehicle that includes an up-down counter wherein the voltage regulating circuit is arranged such that when the engine of the motor vehicle is not driving the generator the magnitude of the count that can be attained by the up-down counter, when the up-down counter is counting up, is clamped to a predetermined value. The clamped count value in the up-down counter is used to determine the pulse width of the field voltage under this condition of operation and the pulse width is of such a value as to limit field current to a predetermined value.

Another object of this invention is to provide an improved fault detecting circuit for a motor vehicle electrical circuit that uses active fault detection apparatus.

IN THE DRAWINGS

Figure I is a schematic circuit diagram of a voltage regulating circuit for a motor vehicle electrical circuit made in accordance with this invention;

Figure 2 is a schematic circuit diagram of the linear integrated circuit chip which forms a part of the voltage regulating circuit illustrated in Figure I;

Figure 3 is a schematic circuit diagram of the sense selector illustrated in block diagram form in Figure 2;

Figure 4 is a schematic circuit diagram of the voltage doubler that is illustrated in block diagram form in Figure 2;

Figure 5 is a block diagram which illustrates the operation of the digital integrated circuit illustrated in Figure I; and

Figure 6 is a more detailed logic diagram of the digital integrated circuit shown in Figures I and 5.

Referring now to the drawings and more particularly to Figure I, a motor vehicle electrical circuit is illustrated which utilizes a voltage regulating circuit made in accordance with this invention. The motor vehicle electrical circuit of Figure I has a generator I0 for the alternating current, the generator having a stator winding I2 of the three-phase Delta-connected type and a field winding I4 which is rotatable. The generator I0 may be of the type disclosed in US patent no 3,538,362, with the exception that the generator I0 in Figure I has a Delta connected stator winding rather than a Y-connected stator winding as shown in US patent no 3,538,362. The voltage regulating circuit of this invention can be used with generators I0 that have either Delta or Y-connected stator windings. The field winding I4 is part of a rotor assembly which is rotatably driven by the engine I6 of the motor vehicle. The engine I6 is shown connected to an idle speed control I8 which controls the idle speed of the engine I6. The generator I0 is driven at a higher speed than the speed of the engine I6 by a belt and pulleys in a well known manner.

The output terminals of the stator winding I2 are connected respectively to AC input terminals of a bridge rectifier 20 of the three-phase full-wave type. The bridge rectifier 20 is comprised of three positive semiconductor diodes 22 which have their cathodes connected to a direct voltage output terminal 24. The bridge rectifier 20 also has three negative semiconductor diodes 26, the anodes of which are connected to a grounded direct current output terminal 30. A junction 32, that is connected between a pair of positive and negative semiconductor diodes 22,26, is connected to a conductor 34 via resistor 33 and conductor 35. The voltage that is developed at junction 32 is a pulsating voltage and the frequency of the voltage pulses developed at this junction is a function of generator and engine speed. When the generator I0 is not rotating it does not generate an output voltage and the voltage at junction 32 is zero. The signal on conductor 34 therefore represents generator and engine speed and also indicates whether or not the generator I0 is rotating. This signal is utilized to control the voltage regulating circuit of this invention in a manner which will be more fully described hereinafter.

The motor vehicle electrical circuit includes a storage battery 36, the negative side of which is grounded and the positive side of which is connected to junction 38. The storage battery 36 will be assumed to be a I2 volt storage battery in the description of this invention. The storage battery 36 is charged by a circuit that includes a conductor 40 that connects the direct voltage output terminal 24 of the bridge rectifier 20 to the junction 38. The storage battery 36 and generator I0 feed various electrical loads on the motor vehicle, which have not been illustrated but which are connected between junction 38 and ground.

The voltage regulating circuit of this invention controls the current through field winding I4 to regulate the voltage appearing between junction 38 and ground to a desired regulated voltage. In describing this invention it will be assumed that the voltage regulating circuit is a I2 volt circuit and that the desired regulated voltage that is to be maintained between junction 38 and ground is I4 volts. This desired regulated voltage will vary with temperature.

The current, through field winding I4, is controlled by a semiconductor switch which takes the form of a metal oxide semiconductor field effect transistor (MOSFET) 42. This MOSFET 42 is an N-channel enhancement mode type of transistor. The MOSFET 42 has a gate G connected to conductor 44, a drain D connected to junction 46 and a source S connected to one side of the field winding I4. The opposite side of the field winding I4 is connected to

ground. The junction 46 is connected to the direct voltage output terminal 24 of the bridge rectifier 20 via conductor 48. A field discharge diode 49 is connected across the field winding l4.

When the MOSFET 42 is biased conductive, between its drain and source, the field winding l4 will be energized via a circuit that can be traced from the direct voltage output terminal 24, through conductor 48 to junction 46, through the drain and source electrodes of MOSFET 42 and then through the field winding l4 to ground. The MOSFET 42 is switched on and off, in a manner to be described, in order to maintain the voltage at junction 38 at the desired regulated voltage which has been assumed to be l4 volts. The field winding l4 can also be energized from storage battery 36 via conductors 40 and 48 and MOSFET 42.

The voltage regulating circuit has a battery voltage sensing circuit 50, which is connected between junction 38 and ground. This battery voltage sensing circuit 50 comprises a first voltage divider comprising resistors 50A, 50B, 50C, 50D, a temperature responsive thermistor 50E having a negative temperature coefficient of resistance and a capacitor 50F. This battery voltage sensing circuit 50 is connected to junction 38 via a conductor 52 and hence senses the voltage across storage battery 36. The voltage at junction 54 is a divided down representation of the voltage across storage battery 36 and is applied to a linear integrated circuit 56 by a conductor 58. The voltage on conductor 58 is therefore a function of battery voltage and this voltage varies in response to temperature changes of the temperature responsive thermistor 50E to provide a temperature compensated regulated voltage. Thus, it has been assumed that the voltage regulating circuit will maintain the voltage at junction 38 at l4 volts but during cold conditions this voltage will be increased and during hot temperature conditions this voltage would be decreased.

The voltage regulating circuit has another voltage sensing circuit 60 which is connected between junction 46 and ground. This voltage sensing circuit 60 comprises a second voltage divider comprising resistors 60A, 60B, 60C, 60D, a temperature sensitive thermistor 60E having a negative temperature coefficient of resistance and a capacitor 60F. This voltage sensing circuit 60 is connected to junction 46 via conductor 62. Junction 64 will develop a divided down representation of the voltage appearing between junction 46 and ground and therefore represents a divided down version of the voltage appearing between the direct voltage output terminal 24 of the bridge rectifier 20 and ground. The voltage at junction 64 is applied to the linear integrated circuit 56 via a conductor 66.

The linear integrated circuit 56 includes a sense selector l72 which will be described in detail hereinafter. This sense selector l72 causes the voltage regulating circuit to respond to either a representation of battery voltage on conductor 58 or a representation of bridge rectifier voltage on conductor 66. Under normal conditions the voltage regulating circuit will respond to the battery voltage on conductor 58 but in the event of a malfunction, such as the disconnection of conductor 52 from junction 38, the voltage regulating circuit will continue to operate by responding to the bridge rectifier voltage on conductor 66. In either case, a temperature compensated regulated voltage will be produced since battery voltage sensing circuit 50 and voltage sensing circuit 60 both have a temperature sensitive circuit element in the form of a temperature responsive thermistor 50E and 60E.

The voltage regulating circuit includes a signal lamp 68 that is connected between a conductor 70 and a manually operable switch 72, which may be the ignition switch of the motor vehicle. The manually operable switch 72 is connected to junction 38 via a conductor 74. As will be explained, the signal lamp 68 is energized during certain malfunction conditions to indicate to the operator of the motor vehicle that a malfunction has occurred.

The linear integrated circuit 56 is connected to conductor 34 which provides a pulse frequency to the linear integrated circuit 56 that is a function of engine and generator speed. The linear integrated circuit 56 is connected to conductor 44 which, as mentioned, is connected to the gate of the MOSFET 42.

The linear integrated circuit 56 has a power ground conductor 78. The power ground conductor 78 is connected to motor vehicle ground via a resistor 80. The linear integrated circuit 56 also has a signal ground conductor 82 which forms a signal ground connection for the linear integrated circuit 56. The signal ground conductor 82 is connected to motor vehicle ground via conductor 86 and is connected to a digital integrated circuit 90 via conductor 92.

The linear integrated circuit 56 has a so-called remote sense conductor 93 which is shown connected to ground in Figures I and 2. When the voltage regulating circuit is manufactured, remote sense conductor 93 will either be connected to signal ground and hence to motor vehicle ground, as shown, or alternatively the remote sense conductor 93 can be allowed to float or in other words is not connected to ground. The manner in which remote sense conductor 93 is connected during manufacture of the voltage regulating circuit, that is, grounded or not grounded, determines whether or not the voltage regulating circuit will be capable of energizing signal lamp 68 in the event that the conductor 52 becomes inadvertently disconnected from junction 38. Where the storage battery 36 is located in a remote location, such as in the trunk of the motor vehicle, it is desirable to be able to indicate to the driver of the motor vehicle that the conductor 52 has become disconnected from junction 38 by causing the signal lamp 68 to be energized. When such an indication is desired the remote sense conductor 93 is not connected to ground. If it is not desired that an indication be given, the remote sense conductor 93 is grounded. The manner in which the arrangement is implemented, to provide the function just described, will be described in more detail hereinafter.

The junction 46, which is connected to conductor 48 and to direct voltage output terminal 24, is connected to a conductor 94. The voltage on conductor 94 is substantially the same as the desired regulated voltage at direct voltage output terminal 24. The linear integrated circuit 56 is connected to conductor 94 via a resistor 96 and a conductor 98. As will be more fully described hereinafter, the conductor 98 supplies voltage to a voltage multiplier circuit in the form of a voltage doubler 200 that is utilized in the voltage regulating circuit. The linear integrated circuit 56 is further connected to conductor 94 via resistor 100 and conductor 102. A capacitor 104 is connected between conductor 102 and ground. The voltage on conductor 102 has been identified as voltage VLIN.

The linear integrated circuit 56 and the digital integrated circuit 90 are interconnected by conductors 108, 110, 112, 114, 116 and 118. As will be more fully described, the conductor 108 applies a substantially constant voltage VDIG to the digital integrated circuit 90. The conductor 110 applies a set-point signal to the digital integrated circuit 90. The conductor 112 applies a signal to linear integrated circuit 56 from digital integrated circuit 90 that is indicative of whether or not the generator 10 is rotating. The conductor 114 applies a signal to linear integrated circuit 56 from digital integrated circuit 90 that is indicative of a high speed condition of the engine 16 and generator 10. The conductor 116 supplies a signal from the digital integrated circuit 90 to the linear integrated circuit 56 that controls the pulse width or on time of the MOSFET 42. The conductor 118 supplies a square wave signal to the digital integrated circuit 90, the frequency of which is a function of engine and generator speed.

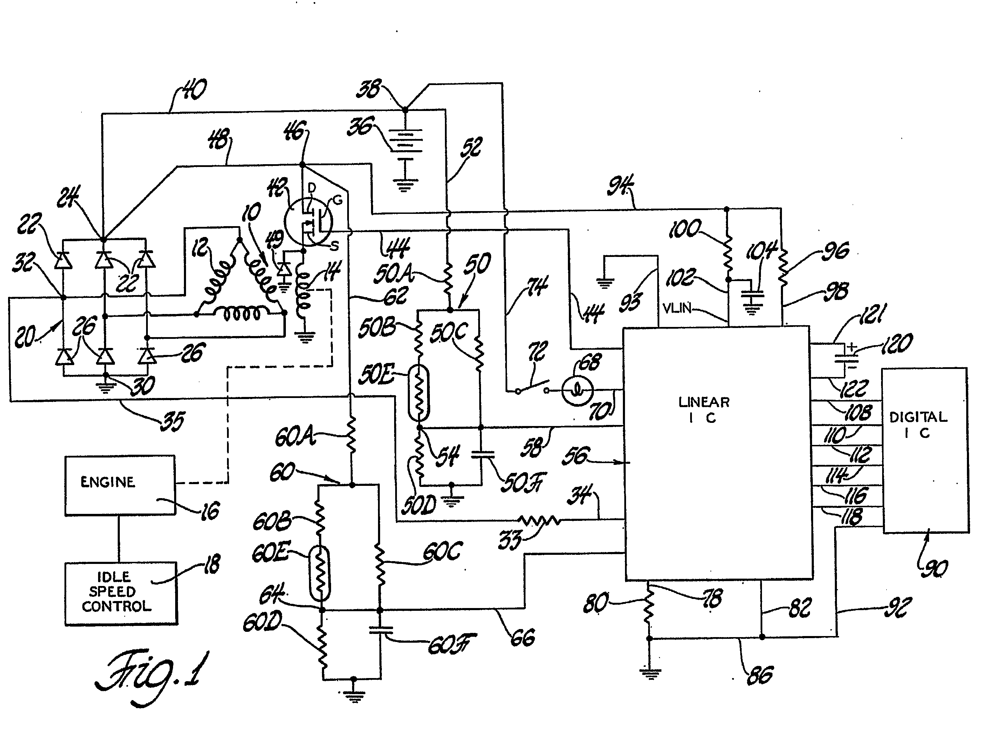

As previously mentioned, the voltage regulating circuit of this invention utilizes a voltage doubler 200. The capacitor 120 for this voltage doubler 200 is illustrated in Figure 1. This capacitor 120 is connected to the linear integrated circuit 56 by conductors 121 and 122 in a manner to be more fully described.

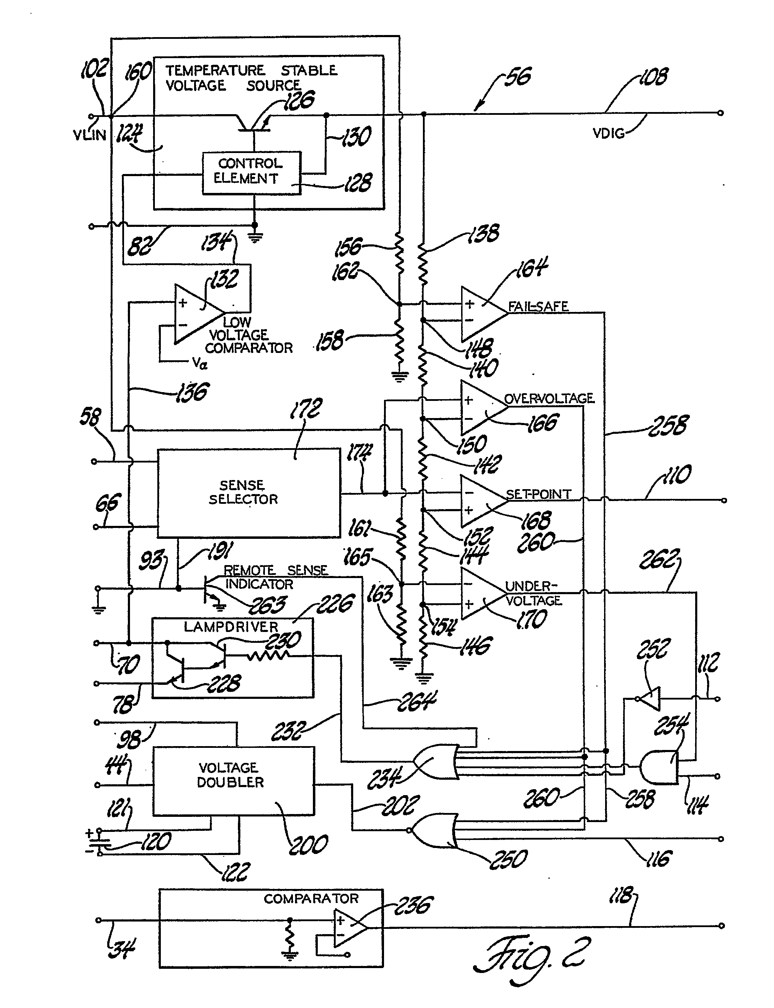

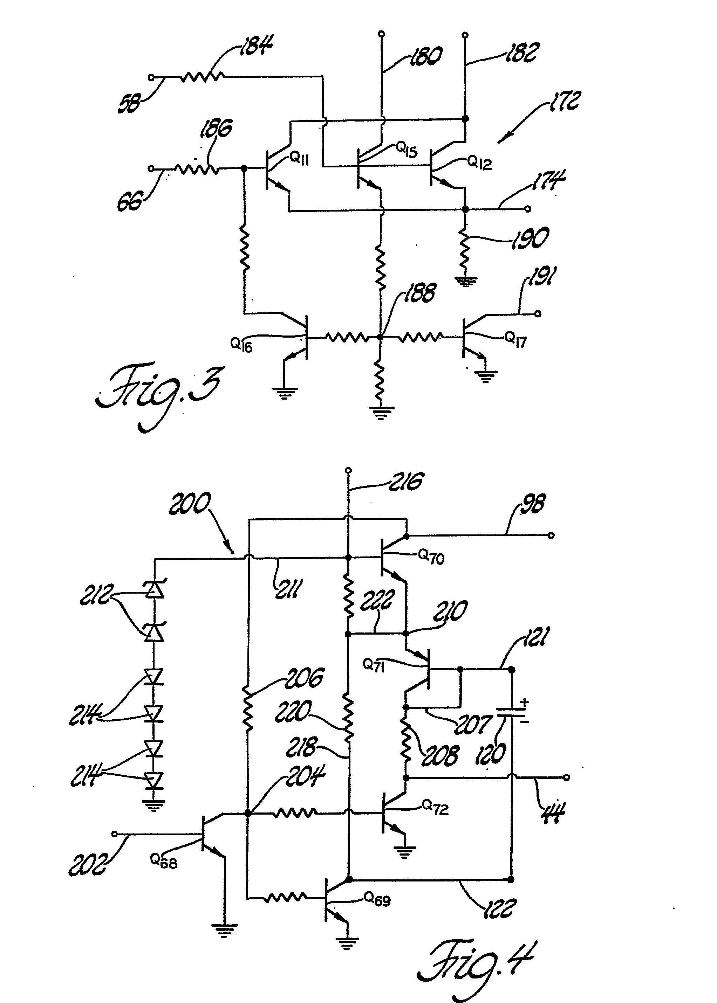

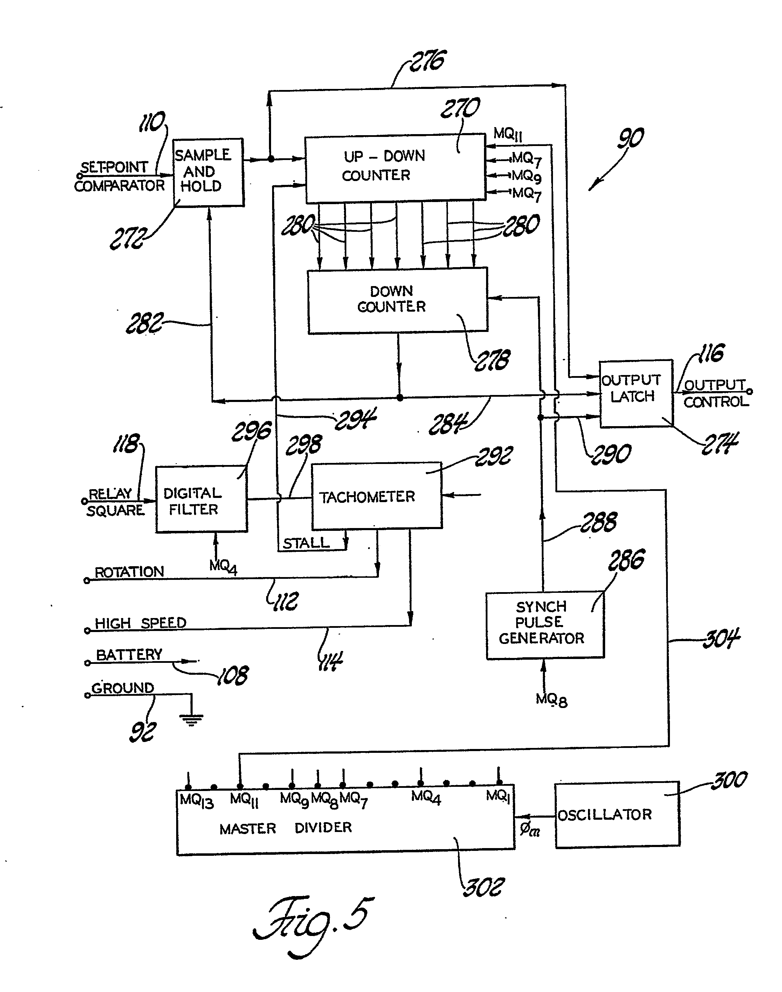

The linear integrated circuit 56 is illustrated in Figure 2 and the specific circuitry for the sense selector 172 and voltage doubler 200, shown as blocks in Figure 2, are illustrated in detail in Figures 3 and 4.

The linear integrated circuit 56, which is illustrated in Figure 2, will now be described. In Figure 2, various points in the circuit have been designated by the normal ground symbol. These symbols indicate that the particular grounded point in the circuit is connected both to signal ground and motor vehicle ground although, as pointed out previously, signal ground for linear integrated circuit 56 is connected to motor vehicle ground by conductor 82. It is to be understood that linear integrated circuit 56 is connected to the motor vehicle electrical circuit, illustrated in Figure 1, by conductors which have been identified by the same reference numerals in Figures 1 and 2. The voltage VLIN on conductor 102 is applied to the input of a temperature stable voltage source or internal voltage regulator 124. The purpose of the internal voltage regulator 124 is to maintain a substantially constant voltage VDIG of about 8 volts on conductor 108. The internal voltage regulator 124 has been illustrated somewhat schematically since regulators of this type are well known to those skilled in the art. Thus, the internal voltage regulator 124 comprises an NPN transistor 126 connected in series between the conductors 102 and 108. The base of the NPN transistor 126 is connected to a control element 128 which serves to control the conduction of NPN transistor 126. The control element 128 responds to the voltage on conductor 108 via a conductor 130 and controls the conduction of NPN transistor 126 to maintain the constant voltage VDIG on conductor 108. The control element 128 also responds to the output of a low voltage comparator 132 via a line 134. The low voltage comparator 132 compares the voltage on conductor 70 with a reference voltage $V_a$. The conductor 70 is connected to one side of the signal lamp 68 and is connected to the low voltage comparator 132 by a conductor 136. If the voltage on conductor 136 does not exceed a certain minimum predetermined value the output of the low voltage comparator 132 will cause the control element 128 to bias the NPN transistor 126 nonconductive to thereby disconnect conductors 102 and 108. If the voltage on conductor 136 exceeds the predetermined minimum value the NPN transistor 126 is controlled to conduct to thereby cause the constant voltage VDIG to be developed on conductor 108.

The linear integrated circuit 56 has a voltage divider comprised of resistors 138, 140, 142, 144 and 146 which are connected in series between conductor 108 and ground. This voltage divider 138-146 provides divided down progressively lower voltages at junctions 148, 150, 152 and 154. The voltages at all of these junctions 148-154 are stable voltages since the voltage divider 138-146 is connected to the constant voltage VDIG on conductor 108. Voltage divider 138-146 and internal voltage regulator 124 define reference voltage means. The linear integrated circuit 56 has additional voltage dividers comprised of resistors 156 and 158 and resistors 161 and 163 which are connected between junction 160 and ground. The voltages at junctions 162 and 165 are each a divided down representation of voltage VLIN.

The linear integrated circuit 56 of Figure 2 has a fail-safe comparator 164, an over-voltage comparator 166, a set-point comparator 168 and an under-voltage comparator 170.

As previously mentioned, the voltage regulating circuit of this invention is capable of responding to either a divided down representation of battery voltage on conductor 58 or a divided down representation of bridge rectifier voltage on conductor 66. This is accomplished by the sense selector 172. The sense selector 172 is shown in detail in Figure 3, which will be described. It can be seen, from Figures 2 and 3, that the sense selector 172 is connected with conductors 58 and 66 and is connected with the set-point comparator 168 by a conductor 174. The detailed circuit of the sense selector 172 is illustrated in Figure 3 and comprises conductors 180 and 182 which have the constant voltage VDIG applied thereto. The circuit of Figure 3 utilizes NPN transistors $Q_{11}$, $Q_{12}$, $Q_{15}$, $Q_{16}$ and $Q_{17}$. The conductor 58 (battery voltage) is connected to the bases of NPN

transistors $Q_{15}$ and $Q_{12}$ via a resistor 184. The conductor 66 (bridge rectifier voltage) is connected to the base of NPN transistor $Q_{11}$ via a resistor 186. The bases of NPN transistors $Q_{16}$ and $Q_{17}$ are connected to a junction 188 which in turn is connected to ground by a resistor. The emitters of NPN transistors $Q_{11}$ and $Q_{12}$ are connected to conductor 174 and to ground via a resistor 190. The collector of NPN transistor $Q_{16}$ is connected to the base of NPN transistor $Q_{11}$ and the emitters of NPN transistors $Q_{16}$ and $Q_{17}$ are grounded. The collector of NPN transistor $Q_{17}$ is connected to the conductor 191. The conductor 191 is supplied with voltage from constant voltage VDIG (conductor 108) by circuitry that is not illustrated.

The NPN transistor $Q_{15}$ senses the voltage appearing between conductor 58 and ground (battery voltage) and when this voltage is above a predetermined level the NPN transistor $Q_{15}$ is biased conductive. The voltage level required to cause NPN transistor $Q_{15}$ to conduct may be about 4 to 6 volts. Assuming that battery voltage (12 volts) has been applied to conductor 58 the NPN transistor $Q_{15}$ will be biased to conduct. The conduction of NPN transistor $Q_{15}$ will cause NPN transistors $Q_{16}$ and $Q_{17}$ to be biased conductive. With NPN transistor $Q_{16}$ biased to conduct, the base voltage of NPN transistor $Q_{11}$ is lowered to a point where it is biased nonconductive. The conduction of NPN transistor $Q_{17}$ lowers the voltage of conductor 191 toward ground potential. In the condition of operation that has just been described, NPN transistor $Q_{12}$ operates as a voltage follower to thereby apply a sense voltage to conductor 174 and set-point comparator 168 that represents the voltage at conductor 58 or in other words, the conductor 174 is now sensing battery voltage.

If the voltage at conductor 58 drops to a point where NPN transistor $Q_{15}$ is no longer biased to conduct (below 4 to 6 volts) the circuit will cause a sense voltage to be developed on conductor 174 that is representative of the alternator or bridge rectifier voltage on conductor 66. The voltage on conductor 58 may be lowered, for example, by a disconnection of conductor 52 from junction 38 in which case the voltage on conductor 58 would be zero. When the voltage on conductor 58 drops to a value that biases NPN transistor $Q_{15}$ nonconductive, NPN transistors $Q_{16}$ and $Q_{17}$ will be biased nonconductive. NPN transistor $Q_{11}$ will now be biased into conduction and it now operates as a voltage follower to provide a sense voltage on conductor 174 that is substantially equal to the voltage on conductor 66.

Moreover, with NPN transistor $Q_{17}$ biased nonconductive the voltage on conductor 191 will go high. The set-point comparator 168 will now have bridge rectifier voltage applied to it and accordingly the voltage regulating circuit will regulate the output voltage in response to bridge rectifier voltage.

The voltage doubler 200 is illustrated in block diagram form in Figure 2 and in detail in Figure 4. The purpose of the voltage doubler 200 is to develop a voltage that is applied to the gate of the MOSFET 42 that is high enough to bias this transistor conductive. Thus, the 12 volts that is available in the motor vehicle electrical circuit must be increased above 12 volts to bias the MOSFET 42 fully conductive. The reason for this is that the field winding 14 is connected between the source of MOSFET 42 and ground and the fact that MOSFET 42 is an N-channel enhancement type. Putting it another way, the field winding 14 is energized by MOSFET 42 in a high side drive configuration. The voltage doubler 200 is connected to conductor 98 and therefore has the voltage at direct voltage output terminal 24 applied to it. The voltage doubler 200 is further connected to a conductor 202 which has a signal developed thereon that will cause the MOSFET 42 to be biased either conductive or nonconductive.

The circuit of voltage doubler 200 is illustrated in detail in Figure 4 and it comprises a pair of NPN transistors $Q_{70}$ and $Q_{72}$. The collector of NPN transistor $Q_{70}$ is connected to conductor 98 and to a junction 204 through a resistor 206. The junction 204 is connected to the base of NPN transistor $Q_{72}$ through a resistor, to the base of an NPN transistor $Q_{69}$ through a resistor, and is connected to the collector of an NPN transistor $Q_{68}$. The emitter of NPN transistor $Q_{68}$ is grounded and the base of this NPN transistor is connected to conductor 202. The circuit of Figure 4 further includes a PNP transistor $Q_{71}$ having an emitter connected to the emitter of NPN transistor $Q_{70}$ and a base connected to conductor 121. The base and collector of PNP transistor $Q_{71}$ are connected by a conductor 207 and a resistor 208 connects the collectors of PNP transistor $Q_{71}$ and NPN transistor $Q_{72}$. The emitter-base circuit of PNP transistor $Q_{71}$ provides a diode having its anode connected to a junction 210 and a cathode connected to conductor 121. A circuit that includes a conductor 211, Zener diodes 212 and forward biased diodes 214 is connected between the base of NPN transistor $Q_{70}$ and ground. This circuit limits the voltage between conductor 211 and ground to about 18 volts. The NPN transistor $Q_{70}$ is continuously biased conductive and essentially operates as a diode with gain. A conductor 216 is connected to the voltage VLIN through circuitry, which has not been illustrated.

The operation of the voltage doubler 200 will now be described. The voltage on conductor 202 will switch high and low to cause the MOSFET 42 to be biased conductive and nonconductive. Assuming that the voltage on conductor 202 is in a low state, the NPN transistor $Q_{68}$ will be biased nonconductive. With NPN transistor $Q_{68}$ in a nonconductive state NPN transistors $Q_{72}$ and $Q_{69}$ will be biased conductive. The capacitor 120 will now be charged via a circuit that can be traced from conductor 98 through the conducting collector-emitter circuit of NPN transistor $Q_{70}$, through the emitter-base diode of PNP transistor $Q_{71}$, through capacitor 120 and through conducting NPN transistor $Q_{69}$ to ground. The conduction of NPN transistor $Q_{72}$ causes the voltage at conductor 44 to approach ground potential and since conductor 44 is connected to the gate of MOSFET 42 the gate of MOSFET 42 approaches ground potential and accordingly MOSFET 42 is biased nonconductive. The condition of the circuit that has just been described corresponds to a condition where the voltage regulating circuit has determined that the MOSFET 42 should be in a nonconductive state.

When the voltage regulating circuit requires that the MOSFET 42 be biased conductive the voltage on conductor 202 is raised or goes high in order to bias NPN transistor $Q_{68}$ conductive. With NPN transistor $Q_{68}$ conductive, NPN transistors $Q_{69}$ and $Q_{72}$ are biased nonconductive. A voltage is now applied to conductor 44 and to the gate of MOSFET 42 which is substantially the sum of the voltage accumulated on capacitor 120 and the voltage on conductor 98 which is substantially the output voltage of the bridge rectifier 20 on conductor 94. Thus, when NPN transistor $Q_{72}$ is biased nonconductive, the positive side of capacitor 120 is connected to conductor 44 via conductor 207 and resistor 208. The negative side of capacitor 120 is now connected to the positive voltage on conductor 98 via conductor 122, a conductor 218, a resistor 220, a conductor 222 and the collector-emitter path of NPN transistor $Q_{70}$. As a result of this, the voltage accumulated on capacitor 120 is added to the voltage between conductor 98 and ground with the result that a sufficient voltage is applied to the gate electrode of MOSFET 42 to bias it conductive. When the output voltage of the bridge rectifier 20 on conductor 94 is about 14 volts the voltage applied to the gate of MOSFET 42 will be doubled to about 28 volts. When only battery voltage (12 volts) is applied to conductor 94 the voltage applied to the gate of MOSFET 42 will be doubled to about 24 volts. The resistor 96 limits the charging current to capacitor 120.

The linear integrated circuit 56 of Figure 2 has a lamp driver circuit 226 that is comprised of NPN transistors 228 and 230 connected, as illustrated. The collectors of these two NPN transistors 228,230 are connected to conductor 70 which in turn is connected to one side of signal lamp 68. The emitter of NPN transistor 228 is connected to power ground conductor 78 that in turn is connected to motor vehicle or power ground through resistor 80, as shown in Figure 1. The base of NPN transistor 230 is connected to a conductor 232 which is connected to the output of an OR gate 234. When the output of OR gate 234 goes high, NPN transistors 230 and 228 are biased conductive to thereby energize the signal lamp 68 through resistor 80.

The linear integrated circuit 56 has a comparator 236. The output of this comparator 236 is connected to conductor 118 and its input is connected to conductor 34. The comparator 236 operates as a squarer to provide square wave pulses on conductor 118 that have the same frequency as the voltage transitions at the junction 32 of bridge rectifier 20.

The linear integrated circuit 56 has a NOR gate 250, an inverter 252 and an AND gate 254, all connected as illustrated in Figure 2.

The functions of the linear integrated circuit 56 illustrated in Figure 2 will now be described. When an operator of the motor vehicle closes the manually operable switch 72 the low voltage comparator 132 will sense the voltage at the conductor 70 and if this voltage is normal it will cause the internal voltage regulator 124 to switch on to thereby cause the constant voltage VDIG to be applied to conductor 108 from conductor 102.

The set-point comparator 168 compares the voltage at junction 152 (reference voltage) with the sense voltage on conductor 174. The sense voltage on conductor 174 can either be a representation of battery voltage or a representation of bridge rectifier voltage, depending upon which voltage has been selected by sense selector 172. When the sense voltage on conductor 174 is greater than the reference voltage at junction 152 the output on conductor 110 is low or zero (second magnitude). If the sense voltage on conductor 174 is less than the reference voltage at junction 152 the set-point comparator 168 develops a high or 1 output (first magnitude). The voltage on conductor 110 therefore goes high and low, depending upon whether the sense voltage that is being sensed is either higher or lower than the reference voltage. This set-point comparator 168 is the primary control for the voltage regulating circuit and, as will be more fully described hereinafter, the set-point signal on conductor 110 is applied to the digital integrated circuit 90 to develop the pulse width or on time of the MOSFET 42.

The fail-safe comparator 164 compares the voltages at junctions 162 and 148. The voltage at junction 162 is a divided down representation of the voltage VLIN and the voltage at junction 148 is a divided down version of constant voltage VDIG. The voltage at junction 148 is higher or scaled up from the (set-point) reference voltage on junction 152. If the voltage at junction 162 is greater than the voltage at junction 148 the fail-safe comparator 164 develops an output which is applied to a line or conductor 258 that is connected as one input to the OR gate 234 and as one input to NOR gate 250. Under this condition of operation the development of the signal on conductor 258 will, via NOR gate 234, cause the lamp driver circuit 226 to become conductive to energize the signal lamp 68. In addition, under this condition of operation the output of the NOR gate 250, which is applied to conductor 202, goes low thereby biasing NPN transistor $Q_{68}$ (Figure 4) nonconductive which in turn causes NPN transistors $Q_{72}$ and $Q_{69}$ to be biased conductive with the result that the voltage doubler 200 is turned off so that the MOSFET 42 is biased to a nonconductive state.

The purpose of the fail-safe comparator 164 and associated circuitry is to permit the voltage regulating circuit to regulate at a higher voltage than the desired regulated voltage of 14 volts in the event that conductor 40 becomes disconnected from junction 38 or becomes disconnected from direct voltage output terminal 24. If such a disconnection occurs the bridge rectifier 20 is no longer connected to the storage battery 36 and therefore is not applying a voltage to the storage battery. Since the voltage regulating circuit now senses only battery voltage, which is below the desired regulated voltage, the set-point comparator 168 develops a signal on conductor 110 which tends to bias MOSFET 42 continuously conductive to apply continuous field current. If this condition were allowed to persist, the generator I0 output voltage would increase to such a level that it would destroy components of the motor vehicle electrical circuit. When the field winding I4 is energized, as described, the output voltage of the generator I0 will increase but when the voltage VLIN on conductor I02 reaches about 20 to 25 volts the fail-safe comparator I64 develops a signal on conductor 258 which, through the NOR gate 250 and voltage doubler 200, causes the MOSFET 42 to be biased nonconductive. With field current cut-off, the generator I0 output voltage decreases and when it drops below the 20 to 25 volt range the output of fail-safe comparator I64 is such as to cause the MOSFET 42 to be biased conductive. In this manner the output voltage of the generator I0 is regulated to the 20 to 25 volt range.

The overvoltage comparator I66 compares the reference voltage at junction I50 with the sense voltage on conductor I74 which is either battery voltage on conductor 58 or bridge rectifier voltage on conductor 66. The (overvoltage) reference voltage on junction I50 is higher or is scaled up from the (set-point) reference voltage on junction I52. If the sense voltage on conductor I74 exceeds the reference voltage on junction I50 the overvoltage comparator I66 develops an output on a line 260 which is applied as an input to the NOR gate 250 and to the OR gate 234. The output of OR gate 234 now causes signal lamp 68 to be energized via lamp driver circuit 226 and the output of NOR gate 250 now actuates the voltage doubler 200 to bias MOSFET 42 nonconductive. With MOSFET 42 nonconductive, generator I0 output voltage decreases as does the sense voltage on conductor I74. As the sense voltage on conductor I74 goes below the (overvoltage) reference voltage at junction I50 the output of overvoltage comparator I66 changes state to thereby cause MOSFET 42 to be biased conductive. The voltage regulating circuit now regulates the output voltage to a value that is higher than the desired regulated voltage. By way of example, and not by way of limitation, if the desired generator I0 output voltage to be maintained is I4 volts at a particular temperature, the overvoltage comparator I66 can be actuated to produce an overvoltage signal on line 260 when the output voltage reaches about I6 volts. Putting it another way, overvoltage comparator I66·can be triggered when the generator I0 output voltage is about 2 volts above the desired regulated voltage. The overvoltage comparator I66 is intended to operate when a failure occurs in the voltage regulating circuit which causes excessive field current and where the conductors 40 and 52 are properly connected. One example of this would be a shorted MOSFET 42.

The under-voltage comparator I70 compares the reference voltage at junction I54 with the voltage on junction I65. When the generator I0 output voltage is not abnormally low the reference voltage at junction I54 is lower than the voltage on junction I65. If the voltage on junction I65 goes lower than the reference voltage on junction I54 the output of the under-voltage comparator I70 develops a signal on a line 262 that is applied as one input to AND gate 254. The other input to AND gate 254 is the high speed signal on conductor II4 which goes to a high or I level when generator speed is higher than a predetermined speed of, for example, 3000 rpm. During an under-voltage condition and generator speed above a predetermined speed the output of AND gate 254, which is applied as an input to the OR gate 234, causes the lamp driver circuit 226 to be driven to a conductive state to thereby energize the signal lamp 68. If the generator speed is below the predetermined speed (3000 rpm) the signal on conductor II4 goes low and if an under-voltage condition now exists, the signal lamp 68 is not energized. The under-voltage condition can be one in which the voltage at direct voltage output terminal 24 drops below approximately II volts.

It has been previously mentioned that the remote sense conductor 93 (Figures I and 2) can be connected to ground or not connected to ground. If remote sense conductor 93 is not connected to ground, signal lamp 68 will be energized if conductor 52 becomes disconnected from junction 38. If remote sense conductor 93 is connected to ground, as has been illustrated in Figures I and 2, the signal lamp 68 will not be energized if conductor 52 becomes disconnected from junction 38. This is implemented by a circuit, (shown in Figure 2) that includes a (remote sense indicator) NPN transistor 263. The emitter of this NPN transistor 263 is grounded and its base is connected to remote sense conductor 93. The base of NPN transistor 263 is connected to conductor I9I that in turn is connected to the collector of NPN transistor $Q_{I7}$ (Figure 3) of sense selector I72. Assuming that the voltage regulating circuit has been manufactured so that remote sense conductor 93 is not grounded and that conductor 52 is disconnected from junction 38, the sense selector I72 is switched to a condition wherein NPN transistor $Q_{I7}$ is biased nonconductive to cause the collector potential of NPN transistor $Q_{I7}$ and conductor I9I to go high. The voltage on conductor I9I biases NPN transistor 263 conductive so that the voltage level on line 264 goes low. The line 264 is connected to voltage VLIN through one collector of a multiple collector PNP transistor, which is not illustrated. The line 264 is one input to OR gate 234 and when the voltage on line 264 goes low the output of OR gate 234 causes signal lamp 68 to be energized.

When remote sense conductor 93 is grounded, the base of NPN transistor 263 is always at a low level so that NPN transistor 263 is always biased nonconductive and the voltage on line 264 is high so that signal lamp 68 is not energized. This condition of operation will not change in the event that conductor 52 becomes disconnected from junction 38.

In Figure 2 the rotation signal on conductor II2 is applied as an input to the OR gate 234 through inverter 252. When the generator I0 is not rotating, the rotation signal is of such a logic level that the OR gate 234 develops an output which causes lamp driver circuit 226 to energize the signal lamp 68. This serves as a bulb continuity check for signal lamp 68 when the operator of the motor vehicle initially closes manually operable switch 72. When the generator 10 is rotating, the signal on conductor 112 changes state and is such as to cause signal lamp 68 to be deenergized.

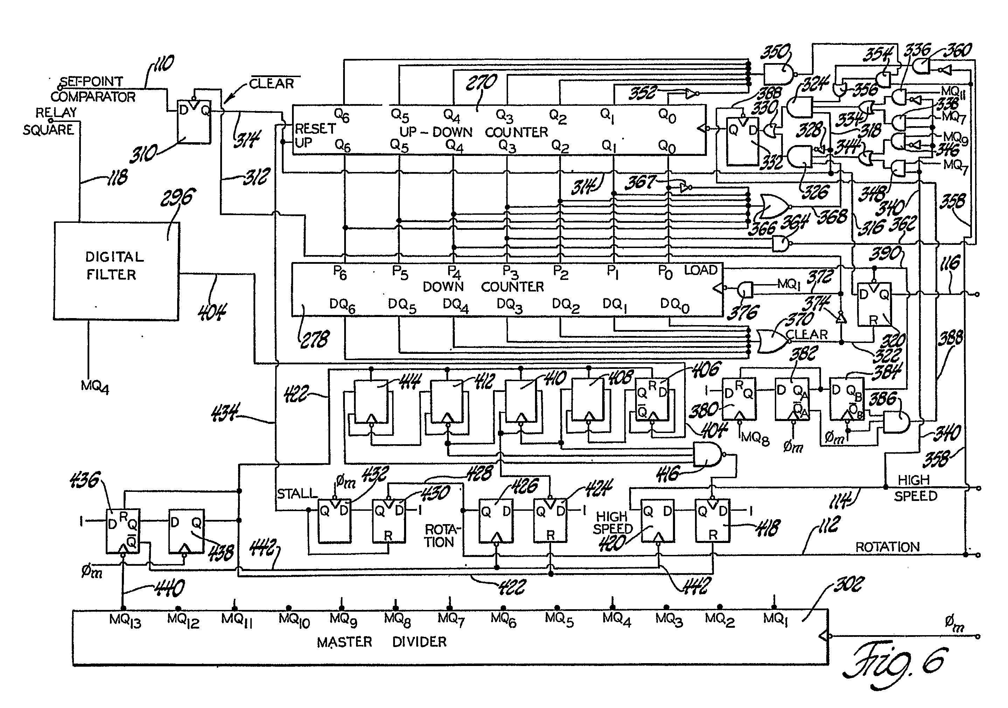

The digital integrated circuit 90 is illustrated in block diagram form in Figure 5 and in detail in Figure 6. Before proceeding to a description of digital integrated circuit 90 it will be helpful to an understanding of this invention to generally describe some of the operation of the digital integrated circuit 90. One of the inputs to digital integrated circuit 90 is the output of the set-point comparator 168 that is applied to digital integrated circuit 90 by conductor 110. The set-point signal on conductor 110 (high or low) depends on whether actual generator 10 output voltage is higher or lower than the desired regulated voltage. The set-point signal on conductor 110 will control the pulse-width of a field voltage by controlling the consecutive on-off states of MOSFET 42. The output signal that controls the switching of MOSFET 42 is developed on conductor 116 of digital integrated circuit 90.

The conductor 118 applies square wave pulses to digital integrated circuit 90, the frequency of which are related to engine and generator speed. The voltage of the signal on conductor 118 stays continuously in one state when the generator 10 is not rotating. The digital integrated circuit 90 utilizes the signal on conductor 118 to develop a signal on conductor 112 (high or low) that indicates whether or not the rotor assembly of the generator 10 is rotating or, in other words, whether or not the engine 16 is driving the generator 10. The signal on conductor 118 is also utilized by digital integrated circuit 90 to develop the high speed signal on conductor 114 that indicates whether or not engine and generator speed are above a predetermined speed.

With the foregoing in mind, the digital integrated circuit 90 of Figure 5 will now be described in more detail. The digital integrated circuit 90 has an up-down counter 270 which is connected to a sample and hold circuit 272. The sample and hold circuit 272 is connected to conductor 110 and hence responds to the output of set-point comparator 168. The output of the sample and hold circuit 272 is coupled to up-down counter 270 and to an output latch 274 by line 276. The output of output latch 274 on conductor 116 determines the switching state (on or off) of MOSFET 42. The up-down counter 270 is connected to a down counter 278 by seven lines 280. The output of down counter 278 is coupled to sample and hold circuit 272 by line 282 and to output latch 274 by line 284. A synchronization pulse generator 286 is coupled to down counter 278 by line 288 and to output latch 274 by line 290. The digital integrated circuit 90 of Figure 5 has a digital tachometer 292 that feeds conductor 112 and conductor 114. Another output of digital tachometer 292 is connected to up-down counter 270 by a so-called engine stall signal line 294. The digital tachometer 292 receives engine speed pulse information from a digital filter 296 that is coupled to digital tachometer 292 by line 298. The input of digital filter 296 is connected to conductor 118.

The digital integrated circuit 90 of Figure 5 has a clock square wave oscillator 300, the output of which is connected to a master frequency divider 302. This master frequency divider 302 has thirteen outputs, shown in Figure 6 and identified as $MQ_1$ through $MQ_{13}$, some of which are not utilized. The output frequency of clock square wave oscillator 300 is designated as $\emptyset_m$ and this signal may have such a frequency that a pulse edge is developed every 10 microseconds. The pulses developed at the output terminals of the master frequency divider 302 are delayed from the occurrence of a $\emptyset_m$ pulse by predetermined time periods. The amount of time delay progressively increases from outputs $MQ_1$ to $MQ_{13}$ and may be respectively 20 microseconds, 160 microseconds, 1.28 milliseconds, 2.56 milliseconds, 5.12 milliseconds, 20.48 milliseconds and 81.92 milliseconds at respective outputs $MQ_1$, $MQ_4$, $MQ_7$, $MQ_8$, $MQ_9$, $MQ_{11}$ and $MQ_{13}$, shown in Figure 6. The master frequency divider 302 is arranged such that successive outputs $MQ_1$-$MQ_{13}$ have a frequency that is one-half the frequency of the preceeding output. Thus, the frequency at output $MQ_2$ is one-half the frequency of output $MQ_1$ and so on.

In Figure 5, one output $MQ_{11}$ is shown connected to up-down counter 270 by a line 304. In Figure 6, output $MQ_{13}$ is shown connected to a flip-flop 436 by a line 440. The line 304 in Figure 5 and the line 440 in Figure 6 represent one connection between one output of the master frequency divider 302 and one element in the digital integrated circuit 90. In order to simplify the drawings, other connections between the outputs $MQ_1$-$MQ_{13}$ of master frequency divider 302 and other circuit elements have not been illustrated by lines. It is to be understood that the short lines in the digital integrated circuit 90 of Figures 5 and 6, that have an MQ designation, are connected to a like MQ output of master frequency divider 302 and that a line identified as $\emptyset_m$ is connected to the output of clock square wave oscillator 300 which is $\emptyset_m$.

Before proceeding to a detailed description of Figure 6, a general description of the operation of the voltage regulating circuit will now be set forth. The down counter 278, at a specific time in the cycle, is loaded with the data (binary number) then existing in up-down counter 270. The down counter 278 is then decremented or counted down until it is clear. The time span, from when the down counting of down counter 278 starts until down counter 278 is empty, is identically equal to the time duration that MOSFET 42 is biased conductive to energize field winding 14. Putting it another way, the MOSFET 42 is biased conductive by the voltage regulating circuit as the down counter 278 counts down to the empty state. When down counter 278 reaches the empty state, MOSFET 42 is biased nonconductive and will remain nonconductive, until a subsequent time in the cycle, when down counter 278 is again loaded from up-down counter 270. The voltage regulating circuit thus provides constant frequency pulse width modulation of the field current, that is, the pulse width or the on time of MOSFET 42 is varied and the consecutive on times of MOSFET 42 occurs at a constant frequency. It will be evident, from the foregoing, that the down counter 278 repetitively translates the count that is in up-down counter 270 to a pulse width of field voltage that is a function of the magnitude of the count in up-down counter 270 at the time that the count in up-down counter 270 is loaded into the down counter 278. Putting it another way, the count in up-down counter 270 is repetitively sampled and each time that up-down counter 270 is sampled the pulse width of the field voltage is controlled to be a function of the count in up-down counter 270 at the time it was sampled.

The magnitude of the count (binary number) that is in up-down counter 270 is varied in accordance with the magnitude of the voltage across storage battery 36. When the voltage applied to the storage battery 36 is above a desired regulated voltage the up-down counter 270 is decremented or counted down and when the voltage applied to the storage battery 36 is below the desired regulated voltage the up-down counter 270 is incremented or counted up. Assuming the voltage applied to the storage battery 36 to be below the desired regulated voltage, the up-down counter 270 will count up substantially continuously and the magnitude of the count in up-down counter 270 will be periodically loaded into down counter 278 with the result that pulses of field voltage will be developed, the pulse width of which progressively increase as the up-down counter 270 continues to count up. The progressively increasing pulses of field voltage will cause the output voltage of generator 10 to increase and eventually the voltage applied to storage battery 36 will exceed the desired regulated voltage. When this happens, the up-down counter 270 is decremented or counted down and at the same time the MOSFET 42 is biased nonconductive to cutoff field current. When battery voltage exceeds the desired regulated voltage the MOSFET 42 is maintained nonconductive and the up-down counter 270 continues to decrement. With field current cutoff the output voltage of generator 10 decreases and eventually the voltage applied to storage battery 36 will drop below the desired regulated voltage. When this happens, the field winding 14 will be energized at a pulse width that corresponds to the decremented count then in up-down counter 270 and the up-down counter 270 is now incremented or counted up. The reason for maintaining MOSFET 42 biased nonconductive, when generated voltage is too high, is to prevent an over-voltage from being generated when motor vehicle loads are suddenly removed or disconnected from the generator 10. When the up-down counter 270 is full, the binary number stored therein corresponds to maximum pulse width of the field voltage. When up-down counter 270 is clear or has substantially no count MOSFET 42 is biased nonconductive to provide zero pulse width. At all values stored in up-down counter 270 between its full and clear states, the pulse width of the field voltage varies linearly with the binary number in up-down counter 270.

The voltage regulating circuit of this invention can operate in four different modes, which will now be described. When the speed of the engine 16 that drives the generator 10 exceeds a certain predetermined speed, which is higher than the idle speed of the engine 16, the voltage regulating circuit of this invention operates in what will be termed a first mode of operation. In this first mode of operation, the up-down counter 270 is incremented and decremented in a manner that has been described so as to control the pulse width of the field voltage to thereby maintain the desired regulated output voltage. In this first mode of operation, the frequency at which the up-down counter 270 is incremented is the same as the frequency at which it is decremented. In regard to operating in this first mode of operation, which is engine speed related, the voltage regulating circuit of this invention senses generator speed which of course is related to engine speed. By way of example, it will be assumed in the future description of this invention that operation in this first mode takes place when generator speed exceeds 3000 rpm. If the speed ratio of the belt and pulleys connecting the engine 16 and the generator 10 is assumed to be about 3.5 to 1, this corresponds to an engine speed of about 850 rpm. Thus, assuming these speeds, the high speed signal on conductor 114 will have one value when generator speed is above 3000 rpm and another value when generator speed is below 3000 rpm. The predetermined speed (3000 rpm) is one in which the engine speed (850 rpm) is higher than idle speed. The speed values are given by way of example and can be varied to suit the idle speed range of a particular engine 16 and the speed ratio between the engine 16 and generator 10 of a particular motor vehicle. In any event, the term "predetermined high speed", as used hereinafter, means a generator and engine speed which is higher than engine idle speed for a particular engine.

When engine speed is below the predetermined speed of 850 rpm or, in other words, when the engine speed is in an idle range, the voltage regulating circuit will be operated in a second mode which can also be termed a load response mode. In the second mode of operation, the rate at which the up-down counter 270 is incremented and decremented is reduced as compared to the rate of incrementing and decrementing that occurs in the first mode of operation. The reason for reducing the incrementing and decrementing rate, during this second mode of operation, is to prevent shaking or stalling of the engine 16 when a large electrical load is suddenly applied to the generator 10. Thus, when a large electrical load is applied, the output voltage of the generator 10 drops below the desired regulated voltage and causes the up-down counter 270 to be incremented upwards to thereby progressively increase the pulse width of the field voltage. Since the incrementing rate in this second mode of operation is less than the incrementing rate when the engine 16 is operating above the idle speed range, field current is slowly increased to thereby slowly fold the electrical load into the engine 16. Essentially, what happens is that the slew rate is slowed or in other words, the time rate of change of the field voltage duty cycle is reduced as compared to the first mode of operation. This load response feature is not required when the engine 16 is operating at a speed above the idle speed range since the mechanical inertia of the engine 16 and generator 10 will carry the engine 16 through large electrical load applications. The incrementing rate of up-down counter 270, during this load response second mode of operation, is less than the decrementing rate.

In a third mode of operation, which corresponds to a condition in which the engine 16 is not driving the generator 10, the field winding 14 is supplied with current at a fixed duty cycle which is sufficient to cause generator 10 output voltage to build up once the generator 10 is driven by the engine 16. This mode of operation can take place during initial starting of the engine 16 that drives the generator 10, that is when the operator of the motor vehicle initially closes the ignition switch to start the engine 16. The voltage regulating circuit of this invention senses the fact that the generator 10 is not being rotated and it then causes the count in the up-down counter 270 to be clamped to a fixed value which corresponds to a fixed field voltage duty cycle which may be, for example 20%. This duty cycle may be called the strobe duty factor.

In a fourth mode of operation, the voltage regulating circuit of this invention is capable of preventing the voltage regulating circuit from going to full field when the engine 16 that drives the generator 10 is started and then stalls. If the engine 16 is initially started to cause the generator 10 to rotate and the engine 16 subsequently stalls, the voltage regulating circuit operates the up-down counter 270 to reset it by a pulse. The up-down counter 270 will then increment back up to the strobe duty factor which has been described above in connection with the third mode of operation.

With the foregoing in mind, the digital integrated circuit illustrated in Figure 6 will now be described. In Figure 6, the legend 1 has been placed adjacent certain flip-flops, for example the D-terminal of a flip-flop 380. This indicates that the particular terminal of a flip-flop is at a one level or connected to positive voltage.

The output of the set-point comparator 168 is applied to the D terminal of a flip-flop 310 which is of the negative edge triggered D-type. This flip-flop 310 corresponds to the sample and hold circuit 272 illustrated in Figure 5. The flip-flop 310 is connected to a line or conductor 312 and the Q terminal of flip-flop 310 is connected to the UP terminal of up-down counter 270 by a conductor 314. The logic level (high or low) on conductor 314 is such as to set up-down counter 270 in an up counting mode when generator 10 output voltage is below the desired regulated voltage and in a down counting mode when generator 10 output voltage is above the desired regulated voltage. The conductor 314 is connected to conductors 316 and 318.

The conductor 316 is connected to a flip-flop 320 of the D-type having its Q output connected to conductor 116 and its R terminal connected to a line 322. The logic levels of conductors 314 and 316 and that of the Q output of flip-flop 320 are such that a variable control signal is developed on conductor 116 that causes MOSFET 42 to be biased nonconductive when the voltage applied to the storage battery 36 is above the desired regulated voltage. The MOSFET 42 is maintained nonconductive as long as the voltage across the storage battery 36 is above the desired regulated voltage and at this time the up-down counter 270 is decremented.

The conductor 318 is connected to one input of an AND gate 324 and to one input of an AND gate 326 via an inverter 328. The output of AND gates 324 and 326 are connected to the inputs of an OR gate 330, the output of which is connected to the D-terminal of a flip-flop 332 of the D-type. The Q output of flip-flop 332 is connected to up-down counter 270 and applies pulses to up-down counter 270 to cause the up-down counter to count up or down at the frequency of the pulses applied thereto from flip-flop 332.

The AND gate 324 has an input connected to the output of an OR gate 334 which in turn has inputs connected respectively to AND gates 336 and 338. One input of AND gate 336 is connected to the $MQ_{11}$ output of the master frequency divider 302 and the other input of AND gate 336 is connected to line 340 through an inverter. The line 340 is connected to conductor 114. The logic level of the high speed signal on conductor 114 and hence on line 340 depends on whether or not generator speed and hence engine speed is above or below the predetermined speed. One of the inputs of AND gate 338 is connected to line 340 and its other input is connected to the $MQ_7$ output of master frequency divider 302.

The AND gate 326 has an input connected to the output of an OR gate 344 which in turn has inputs connected respectively to AND gates 346 and 348. One input of AND gate 346 is connected to output $MQ_9$ of master frequency divider 302 and its other input terminal is connected to line 340 by an inverter. The AND gate 348 has one of its inputs connected to output $MQ_7$ and its other input connected to line 340.

Output terminals $Q_0$-$Q_6$ of up-down counter 270 are connected as seven inputs to a NAND gate 350. One of the lines connecting the up-down counter 270 and NAND gate 350 includes an inverter 352. The output of NAND gate 350 is connected to one input of an AND gate 354 which has an output connected to one of the inputs of an OR gate 356. The other input to AND gate 354 is connected to a line 358 which in turn is connected to conductor 112. The logic level of the rotation signal on conductor 112 and hence on line 358 depends upon whether or not the generator 10 is rotating or in other words, whether or not the engine 16 is driving the generator 10. The other input of OR gate 356 is connected to the output of an AND gate 360 and the output of OR gate 356 is connected to one of the inputs of AND gate 324. One of the inputs of AND gate 360 is connected to line 358 via an inverter and its other input is connected to a line 362 that in turn is connected to the output of a NAND gate 364. One of the inputs of NAND gate 364 is connected to the $Q_4$ output terminal of up-down counter 270 and its other input terminal is connected to $Q_3$ output terminal of up-down counter 270.

One of the input terminals of AND gate 326 is connected to the output of a NOR gate 366 by a line 368. The NOR gate 366 has seven separate inputs connected respectively to output terminals $Q_0$-$Q_6$ of up-down counter 270. The connection between output terminal $Q_0$ and one of the inputs of NOR gate 366 includes an inverter 367.

The output terminals $Q_0$-$Q_6$ of up-down counter 270 are connected to respective input terminals $P_0$-$P_6$ of down counter 278. Output terminals $DQ_0$-$DQ_6$ of down counter 278 are connected as separate inputs to a NOR gate 370. The output of NOR gate 370 is connected to line 322, to a line 372 via an inverter 374 and to flip-flop 310 via inverter 374 and conductor 312. The line 372 is connected to one input of AND gate 376, the output of which is connected to down counter 278. The other input of AND gate 376 is connected to output $MQ_1$ of master frequency divider 302.

Flip-flops 380, 382 and 384 are connected in a manner illustrated in Figure 6. Flip-flop 380 is connected to output $MQ_8$ and flip-flops 382 and 384 are connected to output $\varnothing_m$. Flip-flops 382 and 384 are connected to the input terminals of an AND gate 386. The output of AND gate 386 is connected to a line 388 which in turn is connected to flip-flop 332. The $Q_B$ terminal of flip-flop 384 is connected to the LOAD terminal of down counter 278 and to flip-flop 320 by a line 390. The elements that have just been described correspond to synchronization pulse generator 286 shown in Figure 5. These elements synchronize the digital integrated circuit 90 and determine the fundamental period of the field voltage modulation.

The digital filter 296 is illustrated as a block in Figure 6 and it has an input connected to conductor 118. The output of digital filter 296 is applied to a conductor 404 which in turn is connected to a flip-flop 406. Flip-flops 406, 408, 410, 412 and 414 form part of the digital tachometer which is shown in block diagram form in Figure 5 and identified by reference numeral 292. These flip-flops 406-414 are all D-type flip-flops and are identical. For convenience of illustration, flip-flops 408-414 do not have legends but it is to be understood that they are identical with flop-flop 406. The square wave input to the digital filter 296 on conductor 118 is not a smooth, continuous function but rather is noisy. This noisy signal is conditioned in the digital filter 296 and if a glitch occurs and is present for less than a minimum duration it is ignored. If it is greater than this minimum it is passed on to the digital tachometer 292.

Flip-flops 408, 410, 412 and 414 are connected to the inputs of a NAND gate 416. The output of NAND gate 416 is connected to a flip-flop 418. Flip-flops 418 and 420 are so-called high speed flip-flops since they determine the logic level (high or low) applied to conductor 114. Thus, the Q terminal of flip-flop 420 is connected to conductor 114. The R terminal of flip-flop 418 is connected to line 422 and hence to the R terminals of flip-flops 406-414.

Flip-flops 424 and 426 are so-called rotation signal developing flip-flops since they determine the logic level (high or low) applied to conductor 112. The rotation signal on conductor 112 depends upon whether or not the generator 10 is rotating. Conductor 112 is connected to the Q terminal of flip-flop 426 and is connected to a conductor or line 428.

The conductor 428 is connected to a flip-flop 430. This flip-flop 430, together with a flip-flop 432, provide a stall signal on a line 434 under certain conditions of operation. The line 434 is connected to a RESET terminal of up-down counter 270. Flip-flop 432 receives the $\varnothing_m$ output signal as is indicated in Figure 6.

Flip-flops 436 and 438 generate a time window so that the digital tachometer 292 counts incoming edges of the voltage pulses on conductor 404. Flip-flop 438 has the $\varnothing_m$ output signal applied thereto. Flip-flop 436 is connected to the output $MQ_{13}$ of master frequency divider 302 by line 440. A line 442 connects flip-flop 436 to flip-flops 426 and 420.

The operation of the digital integrated circuit 90 illustrated in Figure 6 will now be described in the various modes of operation of the voltage regulating circuit. Assuming that the engine 16 is driving the generator 10 at a speed that is above the predetermined speed of 3000 rpm and further assuming that the voltage applied to the storage battery 36 by the bridge rectifier 20 of the (diode rectified alternating current) generator 10 is below the desired regulated voltage, the logic level on conductor 314 will be such as to set the up-down counter 270 in an up-counting mode. During this mode of operation, the high speed signal on conductor 114 is applied to AND gates 348 and 338 via line 340. Since generator speed is above the predetermined speed, the logic level on line 340 is such as to cause AND gates 338 and 348 to pass signals from output $MQ_7$ to AND gates 324 and 326. At this time the logic level on conductor 314 is such as to cause the AND gate 324 to be biased conductive whereby pulses at the frequency of the signal from output $MQ_7$ are counted up by the up-down counter 270. As the up-down counter 270 counts up, its count is periodically loaded into the down counter 278 due to the periodic load signal developed at line 390. The down counter 278 is then down counted by the signal at output $MQ_1$ and, as previously explained, field voltage is applied for the time period that the down counter 278 is counting down. When the down counter 278 has completely counted down, a signal is developed by NOR gate 370 which is applied to flip-flop 310 via conductor 312. This triggers the (sample and hold) flip-flop 310. The reason for this feature is that the output of the generator 10 is extremely noisy due to its ripple and the switching of the field current and accordingly taking an instantaneous snapshot of the voltage applied to the storage battery 36 is difficult. When field voltage is applied it exhibits a ringing phenomenon so, depending upon when the (sample and hold) flip-flop 310 is triggered, the information could be good or bad. The point at which maximum stability is observed is when the ringing has been damped but field voltage is still applied. This occurs when the down counter 278 decrements to a clear state and therefore this is when the (sample and hold) flip-flop 310 is triggered.

Assuming that the voltage regulating circuit is operating in the so-called first mode of operation (engine speed higher than a predetermined speed) the up-down counter 270 will continue to count up as long as the voltage applied to the storage battery 36 is below the desired regulated voltage and the down counter 278 will continue to be loaded and counted down to determine the pulse width of the field voltage. As long as up-down counter 270 is counting up, the pulse width of consecutive field voltage pulses will progressively increase. It is noted that each time the down counter 278 counts down to zero the (sample and hold) flip-flop 310 samples the then existing voltage (high or low) on conductor 110 and then determines whether the up-down counter 270 should count up or down. In summary, and at the expense of some reiteration, the elements shown in Figure 6 that determine the output on conductor 116 provide an output latch shown as a block 274 in Figure 5. This output latch 274 takes the time information from the down counter 278 and the output from the (sample and hold) flip-flop 310 and then outputs a pulse that controls the on-time or pulse width of MOSFET 42. At a periodic interval the output latch 274 is set and is then reset when the down counter 278 decrements to zero. When the output latch 274 is set, the down counter 278 is loaded from up-down counter 270. When the down counter 278 is decremented to its empty state, it generates a pulse which, after a time delay, biases MOSFET 42 nonconductive and triggers the (sample and hold) flip-flop 310. The (sample and hold) flip-flop 310 is triggered to sample the voltage level of the set-point signal on conductor 110 before MOSFET 42 goes nonconductive with the result that the voltage on conductor 110 is sampled at a time when field voltage is still applied. As previously mentioned, this type of operation tends to provide maximum stability in that battery voltage is sampled when ringing of the field voltage has been damped and while field voltage is still applied. The time period between the time that down counter 278 reaches zero count and shutoff of MOSFET 42 may be several microseconds and how this is accomplished is described hereinafter.

As long as battery voltage is below the desired regulated voltage the pulse width of the field voltage progressively increases causing the output voltage of the generator 10 to increase. When the voltage applied to the storage battery 36 increases to a point where it exceeds the desired regulated voltage, the set-point signal on conductor 110 changes its state or logic level and it now, through flip-flop 310, sets the up-down counter 270 to a down counting mode. The signal on conductor 314 now causes the MOSFET 42 to be biased nonconductive and is applied to conductor 318 so that AND gate 324 now blocks the signal from output MQ₇ from AND gate 338 and AND gate 326 passes the signal from output MQ₇ from AND gate 348. Accordingly, the up-down counter 270 is counted down at the frequency of the signal from output MQ₇. Thus, the up-down counter 270 is counted down at the same frequency that it was previously counted up, namely the frequency of the signal from output MQ₇. As the down counter 278 is being counted down, the down counter 278 is periodically loaded and counted down but it has no effect on flip-flop 320 because the signal on conductor 314 is applied to the D input of flip-flop 320 via conductor 316 to maintain flip-flop 320 in such a state as to maintain MOSFET 42 nonconductive. Up-down counter 270 continues counting down and eventually the voltage applied to the storage battery 36 will decrease to a value below the desired regulated voltage whereupon the pulse width of the field voltage will be determined by the decremented count value then in up-down counter 270. Up-down counter 270 will now be incremented and the pulse width of consecutive field voltage pulses will be consecutively increased.

The so-called second mode of operation, which has previously been generally described, is a mode of operation wherein engine speed is below a predetermined value (for example 850 rpm) and should generally be in the idle speed range of the engine 16. This mode of operation can also be termed the load response mode, as has been previously described. In this mode of operation, both the rate of up-counting and down-counting of up-down counter 270 is reduced as compared to the counting rates (signal from output MQ₇) used during the first mode of operation. When engine speed drops below the predetermined value the high speed signal on conductor 114 changes its state or level. This high speed signal is applied to line 340 and it causes AND gate 336 to pass the signal from output MQ₁₁ and causes AND gate 346 to pass the signal from output MQ₉. Accordingly, up-down counter 270 is counted up at the frequency of the signal from output MQ₁₁ and is counted down at the frequency of the signal from output MQ₉. These frequencies are both lower than the frequency of the signal from output MQ₇, and the frequency of the signal from output MQ₁₁ is lower than the frequency of the signal from output MQ₉. Accordingly, up-down counter 270 is counted up and down at a lower rate in this second mode of operation as compared to the first mode of operation to provide load response control. Moreover, in this second mode of operation, up-down counter 270 is counted up (signal from output MQ₁₁) at a lower rate than it is counted down (signal from output MQ₉).

The so-called third mode of operation is a mode of operation wherein the generator 10 is not rotating or in other words is not being driven by the engine 16. One condition of operation in which the generator 10 is not being rotated is a situation in which the operator of the motor vehicle initially closes the ignition switch and causes the starter to be energized to crank the engine 16. In this mode of operation, the pulse width of the field voltage is maintained at a fixed minimum pulse width or duty cycle which may be, for example a 20% duty cycle. This minimum duty cycle has been called the strobe duty factor and is implemented by placing a clamp on the up-down counter 270 when the generator 10 is not rotating. Thus, the conductor 112 is connected to line 358 which in turn is connected to one input of AND gate 354 and to one input of AND gate 360 through an inverter. The other input of AND gate 360 is connected to the output of NAND gate 364. Up-down counter 270 is counted up by the signal from output MQ₁₁ but when the up-down counter 270 attains a predetermined count the output of NAND gate 364 is such that it causes AND gate 360 to apply a signal to AND gate 324 to cause AND gate 324 to prevent further up-counting of up-down counter 270 by the pulses of the signal from output MQ₁₁. Up-down counter 270 therefore is clamped in a predetermined up-count state and this fixed count is then used to set the fixed pulse width (20% duty cycle) of the field voltage. The down counter 278 is therefore loaded with the fixed maximum duty cycle count in up-down counter 270 and is counted down to provide a fixed maximum duty cycle field voltage pulse to the field winding 14. In this manner, consecutively occurring pulse width voltage pulses are applied to field winding 14 during this third mode of operation.

When the engine 16 starts to drive the generator 10, the logic level on conductor 112 changes its state and causes the voltage regulating circuit to operate in the second mode of operation, that is, in the load response mode. When the engine 16 is accelerated to a speed that exceeds the predetermined high speed, that is above the idle speed range, the logic level of conductor 114 changes its state to cause the voltage regulating circuit to operate in the first mode.

The fourth mode of operation can be termed the stall controlled mode. When the engine 16 starts to drive the generator 10, the rotation signal is developed on conductor 112 which causes pulses to be applied to up-down counter 270, the frequency of which depend on whether or not engine speed is above or below the predetermined high speed. If the engine 16 should now stall, the generator 10 is no longer being driven and the rotation signal on the conductor 112 now changes state. Since the voltage across the storage battery 36 will now be only battery voltage, the sensed voltage is below the desired regulated voltage and accordingly MOSFET 42 would be biased continuously conductive if this condition were allowed to persist. To prevent this, the logic of the voltage regulating circuit is arranged such that if after rotation is sensed (rotation signal on conductor 112) and the signal on conductor 112 changes its state to indicate no rotation (stalled engine) the up-down counter 270 is reset by a pulse developed on line 434 that is connected to the RESET terminal of up-down counter 270. The up-down counter 270 will now increment back up to the strobe duty factor (20%) so that the field is energized at the minimum duty in the same manner as the third mode of of operation that has been described.

In regard to the pulse width modulation of field voltage, the basic timing period is the time period between the consecutive loading pulses on line 390 since each time a loading pulse occurs the MOSFET 42 is biased conductive. The percentage of this time period between loading pulses that MOSFET 42 is biased conductive (count down time of down counter 278) corresponds to the percent duty cycle. The load pulses on line 390 occur at a constant frequency with equal time periods between consecutive loading pulses.

The up-down counter 270 has an upper clamp provided by inverter 352 and logic elements associated therewith and a lower clamp provided by inverter 367 and logic elements associated therewith. These clamps prevent counter roll over and lock out the counter clock signals at counter values of zero plus and minus one count (...111 and ...001). Thus, the up-down counter 270 is not allowed to count up to a full state and when it does count up to the magnitude allowed by the upper clamp the magnitude will be such that the duty cycle of field voltage may be 127/128 × 100 percent or about 99%. With a 99% duty cycle, the off time of MOSFET 42 is 1% so that for 1% of the basic time period (time between load pulses on line 390) the MOSFET is biased nonconductive. When MOSFET 42 is biased nonconductive the capacitor 120 is charged by the voltage doubler 200 circuit shown in Figure 4. The 1% off time is sufficient to allow capacitor 120 to be completely charged. The upper clamp on up-down counter 270 therefore assures that there will be a sufficient time to charge capacitor 120 when the voltage regulating circuit is operating at the maximum duty cycle of 99%.

The minimum duty cycle provided by the lower clamp can be about 1/128 × 100 percent or about 0.7%. As previously mentioned, there is a time delay of several microseconds between the time that (sample and hold) flip-flop 310 is triggered to sample the voltage level (high or low) of the set-point signal on conductor 110 and the time that MOSFET 42 is biased nonconductive so that the voltage on conductor 110 is sampled while field voltage is still applied. This time delay in biasing MOSFET 42 nonconductive is caused by flip-flop delays and by the gate capacitance of MOSFET 42.

When the fail-safe comparator 164 (Figure 2) is controlling the voltage regulating circuit, due to a disconnection of direct voltage output terminal 24 from the storage battery 36 and with conductor 52 properly connected to the voltage regulating circuit, the voltage level sensed by conductor 52 is only the battery voltage of 12 volts. Since this is below the desired regulated voltage of 14 volts the set-point signal on conductor 110 continuously indicates low battery voltage with the result that up-down counter 270 is set to continuously count up and eventually will count up to its maximum clamped value. This causes the voltage regulating circuit, insofar as the count in up-down counter 270 is concerned, to try to operate at the maximum field voltage duty cycle of 99% but each time the sensed output voltage at junction 162 exceeds the reference voltage at junction 148 the output of fail-safe comparator 164 will cause MOSFET 42 to be biased nonconductive. Thus the 99% field voltage duty cycle, called for by the count in up-down counter 270, is chopped into shorter pulse widths or duty cycles by the periodic switching off of MOSFET 42.

In the foregoing description of this invention it has been pointed out that the count in up-down counter 270 is periodically loaded into down counter 278 and then counted down. When this loading occurs, the count that is in up-down counter 270 does not change due to the loading of down counter 278 but rather up-down counter 270 continues to count up or down as the case may be. Putting it another way, the periodic loading of down counter 278 does not affect the magnitude of the count in up-down counter 270.

The purpose of the strobe duty cycle (20% duty cycle) is to limit the current that MOSFET 42 must handle during the third and fourth modes of operation that have been described.

In regard to the under-voltage comparator I70, it is noted that the voltage applied to its negative terminal from junction I60 is substantially flat temperature compensated, that is it does not vary substantially with changes in temperature.

This invention therefore has the advantages over the prior art of using a digital (up-down) counter which allows more precise pulse width control of the field current, and makes the voltage regulating circuit less sensitive to ripple voltages from the bridge rectifier. By using digital control, this invention can provide load responsive control in which field current is slowly increased to thereby prevent a sudden electrical load from being applied. Further, this invention is capable of being operated in four different modes.

## Claims

1. A method of regulating a voltage comprising sensing the magnitude or an output voltage, comparing the sensed output voltage with a desired reference voltage, incrementing an up-down counter (270) when the sensed output voltage is lower than the desired reference voltage and decrementing the up-down counter when sensed output voltage is higher than the desired reference voltage, repeatedly sampling the magnitude or the count in the up-down counter at a predetermined frequency, characterised in that the method is for regulating the output voltage of a generator (10) that has a field winding (14) and a stator winding (12); in that the sensed output voltage is that or the stator winding (12); by energizing the field winding each time the up-down counter is sampled with a voltage pulse the pulse width of which is a function of the magnitude of the count in the up-down counter at the time that the up-down counter is sampled and during the time that the sensed output voltage is lower than the desired reference voltage; and by maintaining the field winding deenergized when the sensed output voltage is higher than the desired reference voltage while at the same time decrementing the up-down counter.

2. A method as claimed in Claim 1, characterised by developing a set-point signal that has a first magnitude when the sensed output voltage is lower than the desired reference voltage and a second different magnitude when the sensed output voltage is higher than the desired reference voltage, periodically sampling the set-point signal and holding the value or the set-point signal that was sampled, incrementing the up-down counter (270) when the set-point signal that is sampled and held has the first magnitude and decrementing the up-down counter when the set-point signal that is sampled and held has the second magnitude.

3. A method as claimed in Claim 2, characterised by periodically energizing the field winding (14), and by controlling the sampling of the set-point signal such that the set-point signal is sampled at a time when the field winding is energized.

4. A method as claimed in any one of Claims 1 to 3, characterised by causing the rate or incrementing and decrementing of the up-down counter (270) to be lower at generator speeds below a predetermined speed than it is at generator speeds above the predetermined speed.

5. A method as claimed in any one or Claims 1 to 4, characterised by limiting the up count that can be attained by the up-down counter (270) to a predetermined value when the generator (10) is not being rotated and during the incrementing of the up-down counter, whereby the field winding (14) is energised when the generator is not being rotated.

6. A voltage regulating circuit comprising a voltage sensing circuit (50, 60, 172) for developing a sense voltage; reference voltage means (124, 138–146) for developing a set-point reference voltage; an up-down counter (270); a set-point comparator (164) responsive to the sense voltage and the set-point reference voltage operative to increment the up-down counter when the sense voltage is lower than the set-point reference voltage and operative to decrement the up-down counter when the sense voltage is higher than the set-point reference voltage; and a down counter (278) for repeatedly sampling the magnitude of the count in the up-down counter at a predetermined frequency; characterised in that the voltage regulating circuit is for a generator (10) that has a stator winding (12) and a field winding (14); in that the voltage sensing circuit (50, 60, 172) is connected to the stator winding (12) such that the sense voltage is a function of the magnitude or the output voltage of the stator winding; in that the reference voltage means (124, 138–146) is connected to the stator winding; by a field energizing circuit connected to the stator winding and comprising a semiconductor switch (42) connected in series with the field winding; and by an output latch (274) for biasing the semiconductor switch nonconductive when the sense voltage is higher than the set-point reference voltage, and for biasing the semiconductor switch conductive each time the up-down counter is sampled for a time period which is a function of the magnitude of the count in the up-down counter at the time that the up-down counter is sampled and during the time that the sense voltage is lower than the set-point reference voltage.

7. A voltage regulating circuit as claimed in Claim 6, characterised in that the set-point comparator (164) develops a set-point signal or a first magnitude when the sense voltage is less than the set-point reference voltage and develops a setpoint signal or a second different magnitude when the sense voltage is higher than the set-point reference voltage; and characterised by a sample and hold circuit (272) for periodically sampling the set-point signal and connected to the up-down counter (270) such that the up-down counter is incremented when the set-point signal has the first magnitude and is decremented when the set-point signal has the second magnitude, and in that the down counter (278) causes the sample and hold circuit to sample the set-point signal at a time when the semiconductor switch (42) is conductive and just prior to the time that the semiconductor switch (42) is driven to a nonconductive state whereby the sample and hold circuit samples the set-point signal at a time when the field winding (14) is energized.

8. A voltage regulating circuit as claimed in Claim 7, characterised by a synchronised pulse generator (286) coupled to the down counter (278) for periodically causing the magnitude of the count in the up-down counter (270) to be transferred to the down counter and for causing the down counter to count down to a predetermined state, the timimg pulses generated by the synchronised pulse generator being of constant frequency and defining time periods therebetween of a constant predetermined magnitude, the arrangement being such that the semiconductor switch (42) is biased conductive when a timing pulse occurs and remains conductive until the down counter counts down to the predetermined state, the time period that the semiconductor switch remains conductive being a function of the count in the up-down counter when the count is transferred to the down counter and being a percentage of the time period between the timing pulses developed by the synchronised pulse generator, and such that the sample and hold circuit samples the set-point signal when the down counter has counted down to the predetermined state.

9. A voltage regulating circuit as claimed in Claim 8, characterised in that the output latch (274) biases the semiconductor switch (42) nonconductive when the set-point signal has the second magnitude, the arrangement being such that when the set-point signal has the first magnitude the semiconductor switch is biased conductive when a timing pulse occurs.

10. A voltage regulating circuit as claimed in any one of Claims 6 to 9, characterised by a digital tachometer (292) which is responsive to generator speed for causing the rate that the up-down counter (270) is incremented to be higher when generator speed is above a predetermined value than it is when generator speed is below the predetermined value.

11. A voltage regulating circuit as claimed in Claim 10, characterised in that the digital tachometer (292) is operative when the generator (10) is not rotating for incrementing the up-down counter (270) to a limit count of a predetermined magnitude whereby the field winding (14) is energized at a fixed duty cycle corresponding to the fixed magnitude limit count in the up-down counter.

12. A voltage regulating circuit as claimed in Claim 11, characterised in that the digital tachometer (292) is responsive to a condition of operation wherein the generator (10) subsequently stalls after initial rotation for causing the up-down counter (270) to operate to the limit count.

13. A voltage regulating circuit as claimed in any one of Claims 6 to 12 characterised by a bridge rectifier (20) connected to the stator winding (12) and having positive and negative direct voltage output terminals (24,30) one of which is grounded, the field energizing circuit being connected across the direct voltage output terminals, the semiconductor switch comprising a field effect transistor (42) having a source, a drain, and a gate, the field winding (14) being connected between the source of the field effect transistor and the grounded direct voltage output terminal of the bridge rectifier; by a voltage multiplier circuit (200) connected to the direct voltage output terminals of the bridge rectifier and to the gate of the field effect transistor for at times applying a gate drive voltage to the gate that is higher than the voltage applied to the drain to thereby bias the field effect transistor conductive between its drain and souce, the voltage multiplier circuit comprising a capacitor (120) that is connected to be charged from the bridge rectifier when the field effect transistor is biased nonconductive and which is connected to add to the voltage of the bridge rectifier to provide the gate drive voltage when the field effect transistor is to be biased conductive, the output latch (274) applying a variable control signal to the voltage multiplier circuit that is operative to cause the gate voltage of the field effect transistor to vary such that the field effect transistor is biased either conductive or nonconductive; and by an inverter (352) for limiting the count that the up-down counter (270) can attain to a magnitude that will permit the time period that the field effect transistor is biased nonconductive to be long enough to permit the capacitor to fully charge.

14. A voltage regulating circuit as claimed in Claim 13, characterised by a storage battery (36) connected to the direct voltage output terminals (24,30) of the bridge rectifier (20), the voltage sensing circuit comprising a first voltage divider (50) that has a first temperature sensitive circuit element (50E) connected across the storage battery, a second voltage divider (60) that has a second temperature sensitive circuit element (60E) connected across the direct voltage output terminals of the bridge rectifier, and a sense selector (172) for connecting a junction (54) of the first voltage divider to the set-point comparator (168) when the magnitude of the voltage applied to the first voltage divider is above a predetermined value, and for connecting a junction (64) of the second voltage divider to the set-point comparator when the voltage applied to the first voltage divider is below predetermined value, whereby the sense voltage that is applied to the set-point comparator is either a voltage developed by the first voltage divider or a voltage developed by the second voltage divider.

## Patentansprüche

1. Verfahren zum Regeln einer Spannung mit Erfassen der Größe einer Ausgangsspannung, Vergleichen der erfaßten Ausgangsspannung mit einer gewünschten Referenzspannung, Erhöhen eines Auf/Ab-Zählers (270), wenn die erfaßte Ausgangsspannung niedriger als die gewünschte Referenzspannung ist, und Abzählen des Auf/Ab-Zählers, wenn die erfaßte Ausgangsspannung höher als die gewünschte Referenzspannung ist, wiederholtem Abtasten der Größe des Zählwertes im Auf/Ab-Zähler bei einer vorbestimmten Frequenz, dadurch gekennzeichnet, daß das Verfahren zur Regelung der Ausgangsspannung eines Generators (10) dient, der eine Feldwicklung (14) und eine Ständerwicklung (12) besitzt; daß die erfaßte Ausgangsspannung die der Ständerwicklung (12) ist; daß die Feldwicklung jedesmal, wenn der Auf/Ab-Zähler abgetastet wird, mit einem Spannungsimpuls beaufschlagt wird, dessen Impulslänge eine Funktion der Größe des Zählwertes im Auf/Ab-Zähler zu dem Abtastzeitpunkt des Auf/Ab-Zählers ist, während der Zeit, in der die erfaßte Ausgangsspannung niedriger als die gewünschte Referenzspannung ist; und daß die Feldwicklung unbeaufschlagt gehalten wird, wenn die erfaßte Ausgangsspannung höher als die gewünschte Referenzspannung ist, wobei gleichzeitig der Auf/Ab-Zähler abgezählt wird.

2. Verfahren nach Anspruch 1, dadurch gekennzeichnet, daß ein Stellpunkt-Signal entwickelt wird, das eine erste Größe besitzt, wenn die erfaßte Ausgangsspannung niedriger als die gewünschte Referenzspannung ist und eine zweite, unterschiedliche Größe, wenn die erfaßte Ausgangsspannung höher als die gewünschte Referenzspannung ist, daß periodisch das Stellpunkt-Signal abgetastet und der Wert des abgetasteten Stellpunkt-Signals gehalten wird, daß der Auf/Ab-Zähler (270) erhöht wird, wenn das abgetastete und gehaltene Stellpunkt-Signal die erste Größe besitzt, und der Auf/Ab-Zähler abgezählt wird, wenn das abgetastete und gehaltene Stellpunkt-Signal die zweite Größe hat.

3. Verfahren nach Anspruch 2, gekennzeichnet durch periodisches Beaufschlagen der Feldwicklung (14) und durch Steuern des Abtastens des Stellpunkt-Signals in der Weise, daß das Stellpunkt-Signal zu einem Zeitpunkt abgetastet wird, wenn die Feldwicklung beaufschlagt wird.

4. Verfahren nach einem der Ansprüche 1 bis 3, dadurch gekennzeichnet, daß die Rate des Erhöhens und Abzählens des Auf/Ab-Zählers bei Generatordrehzahlen unter einer vorbestimmten Drehzahl kleiner gehalten wird, als sie bei Generatordrehzahlen über der vorbestimmten Drehzahl ist.

5. Verfahren nach einem der Ansprüche 1 bis 4, dadurch gekennzeichnet, daß der durch den Auf/Ab-Zähler (270) zu erreichende Auf-Zählwert auf einen vorbestimmten Wert begrenzt wird, wenn der Generator (10) während des Erhöhens des Auf/Ab-Zählers nicht gedreht wird, wodurch die Feldwicklung (14) beaufschlagt wird, wenn der Generator nicht gedreht wird.

6. Spannungsregelkreis mit einem Spannungs-Erfassungskreis (50, 60, 172) zur Entwicklung einer Erfassungsspannung: Referenzspannungsmittel (124, 138–146) zur Entwicklung einer Stellpunkt-Referenzspannung; einem Auf/Ab-Zähler (270); einem Stellpunktkomparator (164), der in Abhängigkeit von der Erfassungsspannung und der Stellpunkt-Referenzspannung zur Erhöhung des Auf/Ab-Zählers wirksam ist, wenn die Erfassungsspannung niedriger als die Stellpunkt-Referenzspannung ist, und zum Abzählen des Auf/Ab-Zählers, wenn die Erfassungsspannung höher als die Stellpunkt-Referenzspannung ist; und einem Ab-Zähler (278) zum wiederholten Abtasten der Größe des Zählwertes in dem Auf/Ab-Zähler mit einer vorbestimmten Frequenz; dadurch gekennzeichnet, daß der Spannungsregelkreis für einen Generator (10) bestimmt ist, der eine Ständerwicklung (12) und eine Feldwicklung (14) besitzt; daß der Spannungserfassungskreis (50, 60, 172) an der Ständerwicklung (12) so angeschlossen ist, daß die Erfassungsspannung eine Funktion der Größe der Ausgangsspannung der Ständerwicklung ist; daß das Referenzspannungsmittel (124, 138–146) an der Ständerwicklung angeschlossen ist, daß ein Feldbeaufschlagungskreis an der Ständerwicklung angeschlossen ist und einen in Reihe mit der Feldwicklung geschalteten Halbleiterschalter (42) umfaßt; und daß ein Ausgangs-Zwischenspeicherkreis (274) vorgesehen ist, um den Halbleiterschalter nichtleitend vorzuspannen, wenn die Erfassungsspannung höher als die Stellpunktreferenzspannung ist, und den Halbleiterschalter jedesmal leitend vorzuspannen, wenn der Auf/Ab-Zähler während einer Zeitlänge abgetastet wird, die eine Funktion der Größe des Zählinhalts im Auf/Ab-Zähler zum Abtastzeitpunkt des Auf/Ab-Zählers ist und während der Zeit, in der die Erfassungsspannung niedriger als die Stellpunktreferenzspannung ist.

7. Spannungsregelkreis nach Anspruch 6, dadurch gekennzeichnet, daß der Stellpunktkomparator (164) ein Stellpunkt-Signal einer ersten Größe entwickelt, wenn die Erfassungsspannung geringer als die Stellpunkt-Referenzspannung ist und ein Stellpunkt-Signal einer zweiten, unterschiedlichen Größe entwickelt, wenn die Erfassungsspannung höher als die Stellpunktreferenzspannung ist; und dadurch gekennzeichnet, daß ein Abtast/Halte-Kreis (272) zum periodischen Abtasten des Stellpunkt-Signals vorgesehen und so an dem Auf/Ab-Zähler (270) angeschlossen ist, daß der Auf/Ab-Zähler erhöht wird, wenn das Stellpunkt-Signal die erste Größe besitzt, und abgezählt wird, wenn das Stellpunkt-Signal die zweite Größe besitzt, und daß der Ab-Zähler (278) den Abtast/Halte-Kreis das Stellpunkt-Signal zu einem Zeitpunkt abtasten läßt, wenn der Halbleiterschalter (42) leitend ist und gerade vor dem Zeitpunkt, an dem der Halbleiterschalter (42) in einen nichtleitenden Zustand getrieben wird, wodurch der Abtast/Halte-Kreis das Stellpunkt-Signal zu einem Zeitpunkt abtastet, wenn die Feldwicklung (14) beaufschlagt ist.

8. Spannungsregelkreis nach Anspruch 7, gekennzeichnet durch einen mit dem Ab-Zähler (278) gekoppelten synchronisierten Impulsgenerator (286), um periodisch eine Übertragung der Größe des Zählwertes in dem Auf/Ab-Zähler (270) zu dem Ab-Zähler veranlassen und den Ab-Zähler zu veranlassen, bis zu einem vorbestimmten Zustand abzuzählen, wobei die durch den synchronisierten Impulsgenerator erzeugten Zeitgabeimpulse von konstanter Frequenz sind und dazwischen Zeitabschnitte von konstanter vorbestimmter Größe bestimmen und die Anordnung so getroffen ist, daß der Halbleiterschalter (42) leitend vorgespannt wird, wenn ein Zeitgabeimpuls auftritt, und leitend bleibt, bis der Ab-Zähler zu dem vorbestimmten Zustand abzählt, die Zeitlänge, während der der Halbleiterschalter leitend bleibt, eine Funktion des Zählwertes in dem Auf/Ab-Zähler ist, wenn der Zählwert zu dem Ab-Zähler übertragen wird, und ein Anteil der Zeitlänge zwischen den durch den synchronisierten Impulsgenerator entwickelten Zeitgabeimpulsen ist, und so, daß der Abtast/Halte-Kreis das Stellpunkt-Signal abtastet, wenn der Ab-Zähler zu dem vorbestimmten Zustand abgezählt hat.

9. Spannungsregelkreis nach Anspruch 8, dadurch gekennzeichnet, daß der Ausgangs-Zwischenspeicher (274) den Halbleiterschalter (42) nichtleitend vorspannt, wenn das Stellpunkt-Signal die zweite Größe besitzt, wobei die Anordnung so getroffen ist, daß, wenn das Stellpunkt-Signal die erste Größe besitzt, der Halbleiterschalter beim Auftreten eines Zeitgabeimpulses leitend vorgespannt wird.

10. Spannungsregelkreis nach einem der Ansprüche 6 bis 9, gekennzeichnet durch ein Digital-Tachometer (292), das auf Generatordrehzahl anspricht, um die Rate, mit · der der Auf/Ab-Zähler (270) erhöht wird, größer sein zu lassen, wenn die Generatordrehzahl sich über einem vorbestimmten Wert befindet, als die Rate, wenn die Generatordrehzahl sich unter dem vorbestimmten Wert befindet.

11. Spannungsregelkreis nach Anspruch 10, dadurch gekennzeichnet, daß das Digital-Tachometer (292), wenn der Generator (10) sich nicht dreht, die Erhöhung des Auf/Ab-Zählers (270) zu einem Grenzzählwert einer vorbestimmten Größe bewirkt, wodurch die Feldwicklung (14) mit einer festgelegten relativen Einschaltdauer beaufschlagt wird entsprechend dem Grenzzählwert festgelegter Größe im Auf/Ab-Zähler.

12. Spannungsregelkreis nach Anspruch 11, dadurch gekennzeichnet, daß das Digital-Tachometer (292) auf einen Betriebszustand anspricht, bei dem der Generator (10) nach Anfangsdrehung nachfolgend abgewürgt wird, um den Auf/Ab-Zähler (270) zu dem Grenzzählwert betreiben zu lassen.

13. Spannungsregelkreis nach einem der Ansprüche 6 bis 12, gekennzeichnet durch einen an der Ständerwicklung (12) angeschlossenen Brückengleichrichter (20) mit Ausgangsklemmen (24, 30) positiver und negativer Gleichspannung, von denen eine geerdet ist, wobei der Feldbeaufschlagungskreis zwischen den Gleichspannungs-Ausgangsklemmen angeschlossen ist, der Halbleiterschalter einen Feldeffekttransistor (42) mit einem Source-, einem Drain- und einem Gate-Anschluß umfaßt, die Feldwicklung (14) zwischen dem Source-Anschluß des Feldeffekttransistors und der geerdeten Gleichspannungs-Ausgangsklemme des Brückengleichrichters angeschlossen ist; durch einem an den Gleichspannungs-Ausgangsklemmen des Brückengleichrichters und dem Gate-Anschluß des Feldeffekttransistors angeschlossenen Spannungsvervielfacherkreis (200), um zeitweise eine Gate-Ansteuerspannung an den Gate-Anschluß anzulegen, die höher als die am Drain-Anschluß anliegende Spannung ist, um dadurch den Feldeffekttransistor zwischen seinen Drain- und Source-Anschlüssen leitend vorzuspannen, wobei der Spannungsvervielfacherkreis einen Kondensator (120) enthält, der angeschlossen ist, von dem Brückengleichrichter aufgeladen zu werden, wenn der Feldeffekttransistor nichtleitend vorgespannt ist und angeschlossen ist, zu der Spannung des Brückengleichrichters hinzuzufügen, um die . Gate-Ansteuerspannung zu schaffen, wenn der Feldeffekttransistor leitend vorzuspannen ist, der Ausgangszwischenspeicher (274) ein variables Steuersignal an den Spannungsvervielfacherkreis anlegt, das wirksam ist, die Gate-Spannung des Feldeffekttransistors so ändern zu lassen, daß der Feldeffekttransistor entweder leitend oder nichtleitend vorgespannt ist; und durch einen Inverter (352) zum Begrenzen des durch den Auf/Ab-Zähler (270) erreichbaren Zählwertes auf eine Größe, welche die Zeitlänge, während der der Feldeffekttransistor nichtleitend vorgespannt ist, lang genug sein läßt, um den Kondensator voll aufladen zu lassen.

14. Spannungsregelkreis nach Anspruch 13, gekennzeichnet durch eine an den Gleichspannungs-Ausgangsklemmen (24, 30) des Brückengleichrichters (20) angeschlossene Speicherbatterie (36), wobei der Spannungserfassungskreis einen ersten Spannungsuntersetzer (50) umfaßt, bei dem ein erstes auf Temperatur ansprechendes Schaltelement (50E) parallel zur Speicherbatterie angeschlossen ist, einen zweiten Spannungsuntersetzer (60), bei dem ein zweites auf Temperatur ansprechendes Schaltelement (60E) parallel zu den Gleichspannungs-Ausgangsklemmen des Brückengleichrichters angeschlossen ist, und einen Erfassungswähler (172) zum Verbinden einer Verbindungsstelle (54) des ersten Spannungsuntersetzers mit dem Stellpunktkomparator (168), wenn die Größe der an den ersten Spannungsuntersetzer angelegten Spannung über einem vorbestimmten Wert ist, und um eine Verbindungsstelle (64) des zweiten Spannungsuntersetzers mit dem Stellpunktkomparator zu verbinden, wenn die an dem ersten Spannungsuntersetzer angelegte Spannung unter dem vorbestimmten Wert ist, wodurch die an dem Stellpunktkomparator angelegte Erfassungsspannung entweder eine durch den ersten Spannungsuntersetzer entwickelte Spannung oder eine durch den zweiten Spannungsuntersetzer entwickelte Spannung ist.

**Revendications**

1. Procédé de régulation d'une tension consistant à détecter l'amplitude d'une tension de sortie, à comparer la tension de sortie détectée avec une tension de référence voulue, à incrémenter un compteur-décompteur (270) quand la tension de sortie détectée est inférieure à la tension de référence voulue et à décrémenter le compteur-décompteur quand la tension de sortie détectée est supérieure à la tension de référence voulue, à échantillonner répétitivement l'amplitude du comptage dans le compteur-décompteur à une fréquence prédéterminée, caractérisé en ce que le procédé est destiné à réguler la tension de sortie d'une génératrice (10) comportant un enroulement inducteur (14) et un enroulement de stator (12); en ce que la tension de sortie détectée est celle de l'enroulement de stator; en ce qu'il consiste à exciter l'enroulement inducteur chaque fois que le compteur-décompteur est échantillonné avec une impulsion de tension dont la durée d'impulsions est fonction de l'amplitude du comptage dans le compteur-décompteur au moment où ce compteur-décompteur est echantilloné et pendant le temps où la tension de sortie détectée est inférieure à la tension de référence voulue; et à maintenir l'enroulement inducteur désexcité quand la tension de sortie détectée est supérieure à la tension de référence voulue tout en décrémentant en même temps le compteur-décompteur.

2. Procédé selon la revendication 1, caractérisé en ce qu'il consiste en outre à développer un signal de point de réglage qui a une première amplitude quand la tension de sortie détectée est inférieure à la tension de référence voulue et une seconde amplitude différente quand la tension de sortie détectée est supérieure à la tension de référence voulue, à échantillonner périodiquement le signal de point de réglage et à maintenir la valeur du signal de point de réglage qui a été échantillonné, à incrémenter le compteur-décompteur (270) quand le signal de point de réglage qui est échantillonné et maintenu a la première amplitude et à décrémenter le compteur-décompteur quand le signal de point de réglage qui est échantillonné et maintenu a la seconde amplitude.

3. Procédé selon la revendication 2, caractérisé en ce qu'il consiste en outre à exciter périodiquement l'enroulement inducteur (14) et à commander l'échantillonnage du signal de point de réglage de manière que ce signal de point de réglage soit échantillonné à un moment où l'enroulement inducteur est excité.

4. Procédé selon l'une quelconque des revendications 1 à 3, caractérisé en ce qu'il consiste en outre à entraîner que la vitesse d'incrémentation et de décrémentation du compteur-décompteur (270) soit plus basse à des vitesses de la génératrice inférieures à une vitesse prédéterminée qu'à des vitesses de la génératrice supérieures à la vitesse prédéterminée.

5. Procédé selon l'une quelconque des revendications 1 à 4, caractérisé en ce qu'il consiste en outre à limiter le comptage qui peut être atteint par le compteur-décompteur (270) à une valeur prédéterminée quand la génératrice (10) n'est pas mise en rotation et pendant l'incrémentation du compteur-décompteur de manière que l'enroulement inducteur (14) soit excité quand la génératrice n'est pas en rotation.

6. Circuit de régulation de tension comportant un circuit de détection de tension (50, 60, 172) destiné à développer une tension de détection; des moyens de génération de tension de référence (124, 138–146) destinés à développer une tension de référence de point de réglage, un compteur-décompteur (270); un comparateur de point de réglage (164) réagissant à la tension de détection et à la tension de référence de point de réglage, ayant pour fonction d'incrémenter le compteur-décompteur quand la tension de détection est inférieure à la tension de référence de point de réglage et ayant pour fonction de décrémenter le compteur-décompteur quand la tension de détection est supérieure à la tension de référence de point de réglage; et un décompteur (278) destiné à échantillonner répétitivement l'amplitude du comptage dans le compteur-décompteur à une fréquence prédéterminée; caractérisé en ce que le circuit de régulation de tension est destiné à une génératrice (10) comportant un enroulement de stator (12) et un enroulement inducteur (14); et en ce que le circuit de détection de tension (50, 60, 172) est connecté à l'enroulement de stator (12) de manière que la tension de détection soit fonction de l'amplitude de la tension de sortie de l'enroulement de stator; en ce que les moyens de tension de référence (124, 138–146) sont connectés à l'enroulement de stator; par un circuit d'excitation de champ connecté à l'enroulement de stator et comportant un commutateur à semi-conducteur (42) connecté en série avec l'enroulement inducteur; et par un registre de sortie (274) destiné à polariser à l'état non conducteur le commutateur à semi-conducteur quand la tension de détection est supérieure à la tension de référence de point de réglage et à polariser à l'état conducteur le commutateur à semi-conducteur chaque fois que le compteur-décompteur est échantillonné pendant une période qui est fonction de l'amplitude du comptage dans le compteur-décompteur au moment où ce compteur-décompteur est échantillonné et pendant le moment où la tension de détection est inférieure à la tension de référence de point de réglage.

7. Circuit de régulation de tension selon la revendication 6, caractérisé en ce que le comparateur de point de réglage (164) développe un signal de point de réglage d'une première amplitude quand la tension de détection est inférieure à la tension de référence de point de réglage et développe un signal de point de réglage d'une seconde amplitude différente quand la tension de détection est supérieure à la tension de référence de point de réglage; et caractérisé par un circuit d'échantillonnage et maintien (272) destiné à échantillonné périodiquement le signal de point de réglage et connecté au compteur-décompteur (270) de manière que le compteur-décompteur soit incrémenté quand le signal de point de réglage a la première amplitude et soit décrémenté quand le signal de point de réglage a la seconde amplitude et en ce que le décompteur (278) entraîne que le circuit d'échantillonnage et maintien échantillonne le signal de point de réglage à un instant où le commutateur à semi-conducteur (42) est conducteur et juste avant l'instant où le commutateur à semi-conducteur (42) est amené à l'état non conducteur de manière que le circuit d'échantillonnage et maintien échantillonne le point de réglage à un instant où l'enroulement inducteur (14) est excité.

8. Circuit de régulation de tension selon la revendication 7, caractérisé par un générateur d'impulsions synchronisées (286) couplé avec le décompteur (278) pour entraîner périodiquement que l'amplitude du comptage dans le compteur-décompteur (270) soit transférée au décompteur et pour entraîner que le décompteur décompte jusqu'à un état prédéterminé, les impulsions de temporisation produites par le générateur d'impulsions synchronisées ayant une fréquence constante et définissant des périodes entre elles d'une valeur constante prédéterminée, la disposition étant telle que le commutateur à semi-conducteur (42) soit polarisé à l'état conducteur lorsqu'une impulsion de temporisation apparaît et reste conducteur jusqu'à ce que le décompteur décompte jusqu'à l'état prédéterminé, la période dans laquelle le commutateur à semi-conducteur reste conducteur étant fonction du comptage dans le compteur-décompteur quand le comptage est transféré au décompteur et étant un pourcentage de la période entre les impulsions de temporisation développées par le générateur d'impulsions synchronisées et que le circuit d'échantillonnage et maintien échantillonne le signal de point de réglage quand le décompteur a décompté jusqu'à l'état prédéterminé.

9. Circuit de régulation de tension selon la revendication 8, caractérisé en ce que le registre de sortie (274) polarise le commutateur à semi-conducteur (42) à l'état non conducteur quand le signal de point de réglage a la seconde amplitude, la disposition étant telle que lorsque le signal de point de réglage a la première amplitude, le commutateur à semi-conducteur soit polarisé à l'état conducteur lorsqu'une impulsion de temporisation apparaît.

10. Circuit de régulation de tension selon l'une quelconque des revendications 6 à 9, caractérisé par un tachymètre numérique (292) qui réagit à la vitesse de la génératrice en faisant en sorte que la vitesse à laquelle le compteur-décompteur (270) est incrémenté soit plus élevée quand la vitesse de la génératrice est supérieure à une valeur prédéterminée que lorsque la vitesse de la génératrice est inférieure à la valeur prédéterminée.

11. Circuit de régulation de tension selon la revendication 10, caractérisé en ce que le tachymètre numérique (292) a pour fonction, quand la génératrice (10) ne tourne pas, d'incrémenter le compteur-décompteur (270) jusqu'à un comptage limite d'une amplitude prédéterminée de manière que l'enroulement inducteur (14) soit excité avec un rapport cyclique fixe correspondant au comptage limite d'amplitude fixe dans le compteur-décompteur.

12. Circuit de régulation de tension selon la revendication 11, caractérisé en ce que le tachymètre numérique (292) réagit à une condition de fonctionnement dans laquelle la génératrice (10) se bloque après sa rotation initiale de manière que le compteur-décompteur (270) fonctionne jusqu'au comptage limite.

13. Circuit de régulation de tension selon l'une quelconque des revendications 6 à 12, caractérisé par un redresseur en pont (20) connecté à l'enroulement de stator (12) et ayant des bornes de sortie de tension continue positive et négative (24, 30) dont l'une est à la masse, le circuit d'excitation de champ étant connecté entre les bornes de sortie de tension continue, le commutateur à semi-conducteur consistant en un transistor à effet de champ (42) comprenant une source, un drain et une grille, l'enroulement inducteur (14) étant connecté entre la source du transistor à effet de champ et la borne de sortie de tension continue à la masse du redresseur en pont; par un circuit multiplicateur de tension (200) connecté aux bornes de sortie de tension continue du redresseur en pont et à la grille du transistor à effet de champ pour appliquer par intermitten-

ce une tension d'attaque de grille à la grille, supérieure à la tension appliquée au drain de manière à polariser le transistor à effet de champ à l'état conducteur entre son drain et sa source, le circuit multiplicateur de tension comportant un condensateur (120) qui est connecté pour être chargé par le redresseur en pont quand le transistor à effet de champ est polarisé à l'état non conducteur et qui est connecté pour additionner à la tension du redresseur en pont pour produire la tension d'attaque de grille quand le transistor à effet de champ est à polarisé à l'état conducteur, le registre de sortie (274) appliquant un signal de commande variable au circuit multiplicateur de tension qui a pour fonction que la tension de grille du transistor à effet de champ varie de manière que le transistor à effet de champ soit polarisé à l'état conducteur ou à l'état non conducteur; et par un inverseur (352) destiné à limiter le comptage que le compteur-décompteur (270) peut atteindre, a une amplitude qui permet que la période pendant laquelle le transistor à effet de champ est polarisé à l'état non conducteur soit suffisamment longue pour permettre que le condensateur se charge complètement.

14. Circuit de régulation de tension selon la revendication 13, caractérisé par une batterie d'emmagasinage (36) connectée aux bornes de sortie de tension continue (24, 30) du redresseur en pont (20), le circuit de détection de tension comportant un premier diviseur de tension (50) qui comprend un premier élément de circuit sensible à la température (50E), connecté aux bornes de la batterie d'emmagasinage, un second diviseur de tension (60) comprenant un second élément de circuit sensible à la température (60E), connecté aux bornes de sortie de tension continue du redresseur en pont et un sélecteur de détection (172) destiné à connecter une jonction (54) du premier diviseur de tension au comparateur de point de réglage (168) quand l'amplitude de la tension appliquée au premier diviseur de tension est supérieure à une valeur prédéterminée et à connecter une jonction (64) du second diviseur de tension au comparateur de point de réglage quand la tension appliquée au premier diviseur de tension est inférieure à la valeur prédéterminée de manière que la tension de détection qui est appliquée au comparateur de point de réglage soit une tension développée par le premier diviseur de tension ou une tension développée par le second diviseur de tension.

Fig.1

*Fig. 2*

Fig.3

Fig.4

*Fig.5*

Fig. 6

EP 0 214 781 B1